# EUROPÄISCHE PATENTSCHRIFT

(11) **EP 3 274 143 B1**
(45) Veröffentlichungstag und Bekanntmachung des Hinweises auf die Patenterteilung: **28.08.2019**
(21) Anmeldenummer: 16713825.4
(22) Anmeldetag: 24.03.2016
(51) Int. Cl.: B27N 3/00, B27N 3/10

(54) **VERFAHREN ZUR HERSTELLUNG VON LIGNOCELLULOSEWERKSTOFFEN**
METHOD FOR MANUFACTURING WOODEN MATERIALS
PROCÉDÉ DESTINÉ À LA FABRICATION DE MATIÈRES DÉRIVÉES DU BOIS

(30) Priorität: 27.03.2015 EP 15161535
(43) Veröffentlichungstag der Anmeldung: 31.01.2018
(73) Patentinhaber: BASF SE, 67056 Ludwigshafen (DE)
(72) Erfinder: LINDNER, Jean-Pierre Berkan, 68167 Mannheim (DE); JANITZKI, Lukas, 67591 Wachenheim (DE); WEINKOETZ, Stephan, 67434 Neustadt (DE)
(74) Vertreter: BASF IP Association
(86) Internationale Anmeldenummer: PCT/EP2016/056590
(87) Internationale Veröffentlichungsnummer: WO 2016/156226

(56) Entgegenhaltungen:
- WO-A1-2012/080338
- WO-A1-2013/092817
- WO-A1-2015/000913
- US-A- 6 123 884

## Beschreibung

Die vorliegende Erfindung betrifft ein Verfahren zur Herstellung von ein- oder mehrschichtigen Lignocellulosewerkstoffen, wobei beim Mischen der Komponenten für einen einschichtigen Lignocellulosewerkstoff bzw. beim Mischen der Komponenten für die Schicht des Kerns bei einem mehrschichtigen Lignocellulosewerkstoff eine Mischung (Komponente A) enthaltend a₁) organisches Isocyanat mit mindestens zwei Isocyanatgruppen oder deren Gemische und a₂) organische Carbonsäure, Carbonsäureanhydrid, Carbonsäurechlorid oder deren Gemische eingesetzt wird.

Aus der EP-B-1 852 231 ist ein Verfahren zur Herstellung von Holzwerkstoffen aus Zerkleinerungsprodukten von Lignocellulosen und einem Klebstoff bekannt, wobei den Zerkleinerungsprodukten vor dem Heißpressen mindestens ein Additiv der Komponente C, aus der Gruppe Maleinsäureanhydrid, Fumarsäure, Acrylsäure, Polyacrylate, Homologe der Acrylsäure oder deren Gemische, zugefügt wird. Dabei kann die Komponente C nach dem Refiner den Fasern z.B. zusammen mit dem Einblasen des Klebstoffes beigemischt werden. Als Klebstoffe werden u.a. Aminoplastharze wie Harnstoff-Formaldehydharze (UF-Harze), Klebstoffe auf Basis von Isocyanaten (PMDI) oder ein Gemisch hiervon genannt.

Aus der WO-A-2015/000913 ist bereits ein Verfahren zur Herstellung von Lignocellulosewerkstoffen bekannt, bei dem die Holzspäne mit einem Bindemittel und einem Härter beleimt werden, wobei der Härter bevorzugt kurz vor der Verwendung der Bindemittel zugesetzt wird. Als Bindemittel werden u.a. Aminoplastharze, organische Isocyanate mit mindestens zwei Isocyanatgruppen (wie PMDI) oder deren Gemische, als Härter alle dem Fachmann bekannte Härter oder deren Gemische, insbesondere Carbonsäuren, Sulfonsäuren, Phosphorsäure, Polyphosphorsäure oder deren Salze wie Halogenide genannt.

WO-A-2013/092817 offenbart ein Verfahren zur Herstellung von lignocellulosehaltigen Werkstoffen , indem man die Komponenten E (Lignocellulosepartikel), F (Bindemittel ausgewählt aus der Gruppe bestehend aus Aminoplastharz, Phenolformaldehydharz und organischem Isocyanat mit mindestens zwei Isocyanatgruppen) und G (Additive) für die Deckschichten und Komponenten A (Lignocellulosepartikel), B (expandierte Kunststoffteilchen), C (Bindemittel ausgewählt aus der Gruppe bestehend aus Aminoplastharz, Phenoplastharz, und organischem Isocyanat mit mindestens zwei Isocyanatgruppen) und D (Additive) für den Kern mischt, wobei man eine inhomogene Mischung der Komponenten A und B erzeugt.

Diese Verfahren lassen in Bezug auf ihre Herstellprozesse zu wünschen übrig.

Der vorliegenden Erfindung lag daher die Aufgabe zugrunde, den zuvor genannten Nachteilen abzuhelfen. Diese Aufgabe wird durch die Merkmale des Anspruchs 1 gelöst.

Demgemäß wurde ein neues und verbessertes diskontinuierliches oder kontinuierliches, bevorzugt kontinuierliches Verfahren zur Herstellung von ein- oder mehrschichtigen Lignocellulosewerkstoffen enthaltend die Verfahrensschritte
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte, gefunden, welches sich dadurch auszeichnet, dass man im Verfahrensschritt (I) für den Kern von mehrschichtigen oder für einschichtige Lignocellulosewerkstoffe eine Mischung (Komponente A) enthaltend
   a₁) 50 bis 99 Gew.-%, bevorzugt 70 bis 97 Gew.-%, besonders bevorzugt 80 bis 95 Gew.-%, insbesondere 85 bis 92 Gew.-% organisches Isocyanat mit mindestens zwei Isocyanatgruppen oder deren Gemische und
   a₂) 1 bis 50 Gew.-%, bevorzugt 3 bis 30 Gew.-%, besonders bevorzugt 5 bis 20 Gew.-%, insbesondere 8 bis 15 Gew.-% organische Carbonsäure, Carbonsäureanhydrid, Carbonsäurechlorid oder deren Gemische und
   a₃) 0 bis 49 Gew.-%, bevorzugt 0 bis 10 Gew.-%, besonders bevorzugt 0 bis 5 Gew.-% Hilfsmittel oder deren Gemische
einsetzt.

Ferner wurde ein Verfahren zur diskontinuierlichen oder kontinuierlichen Herstellung von ein- oder mehrschichtigen Lignocellulosewerkstoffen gefunden, das sich dadurch auszeichnet, dass man die Komponente A) als eine im Wesentlichen wasserfreie Mischung einsetzt.

Ferner wurde ein diskontinuierliches oder kontinuierliches, bevorzugt kontinuierliches Verfahren zur Herstellung von ein- oder mehrschichtigen Lignocellulosewerkstoffen enthaltend die Verfahrensschritte
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte, indem man im Verfahrensschritt (I) für den Kern von mehrschichtigen oder für einschichtige Lignocellulosewerkstoffe die Lignocellulosepartikel (Komponente LCP-1) mit
   a) 0,01 bis 20 Gew.-%, bevorzugt 0,05 bis 5 Gew.-%, besonders bevorzugt 0,1 bis 1 Gew.-%, insbesondere 0,15 bis 0,75 Gew.-% einer Mischung (Komponente A) enthaltend
      a₁) 50 bis 99 Gew.-%, bevorzugt 70 bis 97 Gew.-%, besonders bevorzugt 80 bis 95 Gew.-%, insbesondere 85 bis 92 Gew.-% organisches Isocyanat mit mindestens zwei Isocyanatgruppen oder deren Gemische,
      a₂) 1 bis 50 Gew.-%, bevorzugt 3 bis 30 Gew.-%, besonders bevorzugt 5 bis 20 Gew.-%, insbesondere 8 bis 15 Gew.-% organische Carbonsäure, Carbonsäureanhydrid, Carbonsäurechlorid oder deren Gemische und
      a₃) 0 bis 49 Gew.-%, bevorzugt 0 bis 10 Gew.-%, besonders bevorzugt 0 bis 5 Gew.-% Hilfsmittel oder deren Gemische,
   b) 0 bis 25 Gew.-%, bevorzugt 0 bis 20 Gew.-%, besonders bevorzugt 0 bis 10 Gew.-%, insbesondere 0 Gew.-% expandierten Kunststoffteilchen mit der Schüttdichte im Bereich von 10 bis 150 kg/m³ (Komponente B),
   c) 1 bis 50 Gew.-%, bevorzugt 3 bis 30 Gew.-%, besonders bevorzugt 5 bis 15 Gew.-% Bindemitteln, ausgewählt aus der Gruppe der Aminoplastharze, Phenoplastharze oder deren Gemische (Komponente C-1) und 0 bis 3 Gew.-%, bevorzugt 0 bis 1 Gew.-%, besonders bevorzugt 0 bis 0,1 Gew.-% organisches Isocyanat mit mindestens zwei Isocyanatgruppen (Komponente C-2),
   d) 0 bis 5 Gew.-%, bevorzugt 0,01 bis 0,5 Gew.-%, besonders bevorzugt 0,1 bis 0,5 Gew.-% Härter (Komponente D) und
   e) 0 bis 5 Gew.-%, bevorzugt 0,5 bis 4 Gew.-%, besonders bevorzugt 1 bis 3 Gew.-% Additiv (Komponente E),
      und, für die Deckschichten von mehrschichtigen Lignocellulosewerkstoffen, die Lignocellulosepartikel (Komponente LCP-2) mit
   f) 0 bis 20 Gew.-%, bevorzugt 0 bis 1 Gew.-%, besonders bevorzugt 0 bis 0,5 Gew.-%, insbesondere 0 bis 0,1 Gew.-% einer Mischung (Komponente F) enthaltend
      f₁) 50 bis 99 Gew.-%, bevorzugt 70 bis 97 Gew.-%, besonders bevorzugt 80 bis 95 Gew.-%, insbesondere 85 bis 92 Gew.-% organisches Isocyanat mit mindestens zwei Isocyanatgruppen oder deren Gemische,
      f2) 1 bis 50 Gew.-%, bevorzugt 3 bis 30 Gew.-%, besonders bevorzugt 5 bis 20 Gew.-%, insbesondere 8 bis 15 Gew.-% organische Carbonsäure, Carbonsäureanhydrid, Carbonsäurechlorid oder deren Gemische und
      f₃) 0 bis 49 Gew.-%, bevorzugt 0 bis 10 Gew.-%, besonders bevorzugt 0 bis 5 Gew.-% Hilfsmittel oder deren Gemische,
   g) 1 bis 30 Gew.-%, bevorzugt 2 bis 20 Gew.-%, besonders bevorzugt 3 bis 15 Gew.-% Bindemittel ausgewählt aus der Gruppe bestehend aus Aminoplastharz, Phenoplastharz, Protein-basiertem Bindemittel und anderem Polymer-basierten Bindemittel oder deren Gemische (Komponente G-1) und 0 bis 3 Gew.-%, bevorzugt 0 bis 1 Gew.-%, besonders bevorzugt 0 bis 0,1 Gew.-% organisches Isocyanat mit mindestens zwei Isocyanatgruppen (Komponente G-2),
   h) 0 bis 5 Gew.-%, bevorzugt 0,01 bis 0,5 Gew.-%, besonders bevorzugt 0,1 bis 0,5 Gew.-% Härter (Komponente H) und
   i) 0 bis 5 Gew.-%, bevorzugt 0,5 bis 4 Gew.-%, besonders bevorzugt 1 bis 3 Gew.-% Additiven (Komponente I) vermischt, gefunden, welches sich dadurch auszeichnet, dass man im Verfahrensschritt (I) die Komponenten A) und
      - die Komponente C-1) bzw.
      - eine Mischung der Komponente C-1) mit einer oder mehreren Komponenten ausgewählt aus der Gruppe der Komponenten C-2), D) oder E)
         (1) getrennt voneinander oder
         (2) als Mischung innerhalb von 0,1 bis 3600 Sekunden, bevorzugt 0,1 bis 300 Sekunden, besonders bevorzugt 0,1 bis 60, insbesondere 0,1 bis 10 Sekunden, ganz besonders bevorzugt 0,1 bis 2 Sekunden nach Herstellung der Mischung
auf die Lignocellulosepartikel aufbringt.

Ferner wurde ein diskontinuierliches oder kontinuierliches, bevorzugt kontinuierliches Verfahren zur Herstellung von ein- oder mehrschichtigen Lignocellulosewerkstoffen gefunden, welches sich dadurch auszeichnet, dass man die Komponente A) als eine im Wesentlichen wasserfreie Mischung einsetzt.

Unter einer im Wesentlichen wasserfreien Mischung wird hier eine Mischung verstanden, die 0 bis 1 Gew.-%, bevorzugt 0 bis 0,1 Gew.-%, besonders bevorzugt 0 bis 0,01 Gew.-%, ganz besonders bevorzugt 0 bis 0,001 Gew.-% Wasser, insbesondere 0 Gew.-% Wasser enthält.

In einer bevorzugten Ausführungsform beträgt das Gewichtsverhältnis von Komponente A) zur Komponente C-1) 0,001:1 bis 1:1, bevorzugt 0,01:1 bis 0,2:1, besonders bevorzugt 0,03:1 bis 0,1:1.

Die Angaben der Gew.-% der Komponenten A) bis E) und F) bis I) sind die Gewichte der jeweiligen Komponente bezogen auf das Trockengewicht der Lignocellulosepartikel. Das Trockengewicht der Lignocellulosepartikel ist das Gewicht der Lignocellulosepartikel ohne das darin enthaltene Wasser. Es wird auch als atro-Gewicht (absolut trocken) bezeichnet. Enthalten die Komponenten A) bis E) und F) bis I) Wasser, werden sie also beispielsweise in Form von wässrigen Lösungen oder Emulsionen eingesetzt, dann wird das Wasser bei den Gewichtsangaben nicht berücksichtigt. Werden beispielsweise 5 kg 30%ige Ammoniumnitrat-Lösung als Komponente H) pro 100 kg Lignocellulosepartikel (Trockengewicht) eingesetzt, dann ergeben sich 1,5 Gew.-% Ammoniumnitrat. Bei Aminoplast- oder Phenoplastharzen wird das Gewicht auf den Feststoffgehalt bezogen. Der Feststoffgehalt von Aminoplast- oder Phenoplastharzen wird bestimmt, indem 1 g des Harzes in eine Wägschale eingewogen, 2 Stunden bei 120°C +/- 2 K in einem Trockenschrank getrocknet und der Rückstand nach Temperierung auf Raumtemperatur in einem Exsikkator gewogen wird. (Zeppenfeld, Grunwald, Klebstoffe in der Holz- und Möbelindustrie, DRW Verlag, 2. Auflage, 2005, Seite 286).

Zusätzlich enthalten alle Schichten Wasser, das bei den Gewichtsangaben nicht berücksichtigt wird.

Das Wasser kann aus der -in den Lignocellulosepartikeln LCP-1) bzw. LCP-2) enthaltenen-Restfeuchte, aus den Bindemitteln C-1), C-2) bzw. G-1), G-2) (beispielsweise wenn das isocyanathaltige Bindemittel als wässrige Emulsion vorliegt oder wenn wässrige Aminoplastharze eingesetzt werden), aus zusätzlich zugegebenem Wasser (beispielsweise zum Verdünnen der Bindemittel oder zum Befeuchten der Deckschichten), aus den Additiven E) bzw. I) (beispielsweise wässrige Paraffinemulsionen), aus den Härtern D) bzw. H) (beispielsweise wässrige Ammoniumsalzlösungen) oder aus den expandierten Kunststoffteilchen B) (wenn diese zum Beispiel mit Wasserdampf aufgeschäumt werden), stammen. Der Wassergehalt der einzelnen Schichten kann bis zu 20 Gew.-%, also 0 bis 20 Gew.-%, bevorzugt 2 bis 15 Gew.-%, besonders bevorzugt 4 bis 10 Gew.-% bezogen auf 100 Gew.-% Gesamttrockengewicht betragen. Bevorzugt ist der Wassergehalt in den Deckschichten DS-A und DS-C größer als im Kern-B.

Der Aufbau der mehrschichtigen Lignocellulosewerkstoffe folgt folgendem Muster:
(A) Deckschicht (DS-A), die obere Deckschicht,
(B) Kern (Kern-B) und
(C) Deckschicht (DS-C), die untere Deckschicht,
wobei die Deckschichten DS-A und DS-C jeweils aus einer oder mehreren, also 1 bis 5, bevorzugt 1 bis 3, besonders bevorzugt 1 bis 2 Schichten unterschiedlicher Zusammensetzungen aufgebaut sein können und die Zusammensetzungen Deckschichten DS-A und DS-C gleich oder unterschiedlich, bevorzugt gleich sind.

Die einschichtigen Lignocellulosewerkstoffe bestehen nur aus einer Schicht, die dem Kern (Kern-B) entspricht, und besitzen keine Deckschicht DS-A und DS-C.

Bevorzugt sind mehrschichtige, ganz besonders bevorzugt dreischichtige Lignocellulosewerkstoffe, also solche, die aus einem Kern und einer oberen und einer unteren Deckschicht aufgebaut sind.

Zusätzlich zu den Deckschichten kann der mehrschichtige Lignocellulosewerkstoff weitere äußere "Schutzschichten" enthalten, bevorzugt zwei weitere äußere Schichten, also eine obere Schutzschicht, die an die Deckschicht DS-A (bei einer Schicht) bzw. an die oberste der oberen Deckschichten DS-A (bei mehreren Schichten) angrenzt und eine untere Schutzschicht, die an die die Deckschicht DS-C (bei einer Schicht) bzw. die unterste der unteren Deckschichten DS-C (bei mehreren Schichten) angrenzt, die eine beliebige Zusammensetzung aufweisen.

Diese Schutzschichten sind deutlich dünner als die Deckschichten. Das Massenverhältnis zwischen Schutzschichten und Deckschichten ist kleiner als 10:90, bevorzugt kleiner als 5:95. Ganz besonders bevorzugt sind keine Schutzschichten vorhanden.

Der einschichtige Lignocellulosewerkstoff kann zusätzlich zu der Schicht Kern-B äußere Schutzschichten enthalten, bevorzugt zwei weitere äußere Schichten, also eine obere Schutzschicht und eine untere Schutzschicht, die an Schicht Kern-B angrenzen, die eine beliebige Zusammensetzung aufweisen. Das Massenverhältnis zwischen Schutzschichten und Kern-B ist kleiner als 5:95, bevorzugt kleiner als 2:98. Ganz besonders bevorzugt sind keine Schutzschichten vorhanden.

Als ein- oder mehrschichtigen Lignocellulosewerkstoffen eignen sich beispielsweise balkenförmige oder plattenförmige Produkte wie Balken oder Platten hergestellt aus Lignocecllulosepartikeln, bevorzugt plattenförmige Produkte wie Platten hergestellt aus Lignocecllulosepartikeln.

Das Verfahren zur Herstellung von Lignocellulosewerkstoffen umfasst folgende Verfahrensschritte:
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte.

Komponenten, die auch 0 Gew.-% sein können, sind nur gegebenenfalls in den Lignocellulosewerkstoffen bzw. in den hierin beschriebenen Mischungen enthalten.

Das offenbarte Verfahren lässt sich wie folgt durchführen: Verfahrensschritt (I) - Mischen der Komponenten der einzelnen Schichten
Die Komponenten LCP-1), A), B), C-1), C-2), D) und E) (Zusammensetzung des Kerns) und ggf. die Komponenten LCP-2), F), G-1), G-2), H), und I) (Zusammensetzung der Deckschichten) werden in separaten Mischvorgängen gemischt, wobei in der Regel jeweils die Lignocellulosepartikel [Komponente LCP-1) bzw. ggf. Komponente LCP-2)] vorgelegt und die restlichen Komponenten A), B), C-1), C-2), D) und E) bzw. ggf. F), G-1), G-2), H) und I) in beliebiger Reihenfolge zugegeben werden.

Es ist auch möglich Gemische der einzelnen Komponenten A), B), C-1), C-2), D) und E) zu verwenden, also beispielsweise die Komponenten D) und E) zu mischen, bevor beide Komponenten gemeinsam den Lignocellulosepartikeln LCP-1) zugemischt werden. Die Komponenten A), B), C-1), C-2), D) und E) können dabei in Portionen aufgeteilt werden und diese Portionen zu unterschiedlichen Zeitpunkten einzeln oder im Gemisch mit einer anderen Komponente den Lignocellulosepartikeln LCP-1) zugemischt werden. Wenn die Komponente, die in Portionen aufgeteilt wird, aus mehreren unterschiedlichen Stoffen besteht, können die einzelnen Portionen unterschiedliche Zusammensetzungen haben. Diese Möglichkeiten bestehen analog auch bei mehrschichtigen Holzwerkstoffen für die Komponenten F), G-1), G-2), H) und I) in den Deckschichten.

In einer bevorzugten Ausführungsform wird nur eine Mischung für die Deckschichten hergestellt und diese Mischung für die beiden Deckschichten entsprechend ihres Gewichtsverhältnisses aufgeteilt.

Ferner ist es möglich, dass die Komponenten LCP-1) bzw. LCP-2) aus Mischungen unterschiedlicher Holzarten und/oder Partikelgrößen zusammengesetzt sind. In einer bevorzugten Ausführungsform sind bei mehrschichtigen Holzwerkstoffen die mittleren Partikelgrößen der Komponente LCP-1) größer als diejenigen der Komponente LCP-2).

### Mischen der Komponenten für den Kern

Die Komponente C-1), die gegebenenfalls in einem separaten Schritt mit einer oder mehreren Komponenten ausgewählt aus den Gruppen der Komponenten C-2), D) und E) gemischt wurde, und die Komponente A), können entweder
(1) getrennt voneinander oder
(2) als Mischung,
bevorzugt als Mischung zu den Lignocellulosepartikeln LCP-1) bzw. zu der Mischung aus Lignocellulosepartikeln LCP-1) mit anderen Komponenten gegeben werden.

### (1) getrennt voneinander

Unter einer Zugabe, die getrennt voneinander erfolgt, wird hierbei verstanden, dass die Komponente C-1 [bzw. die Mischung der Komponente C-1) mit einer oder mehreren Komponenten ausgewählt aus der Gruppe der Komponenten C-2), D) und E)] und die Komponente A) mit Hilfe von separaten Auftragsvorrichtungen, z.B. Düsen oder Auftragsteller, zu den Lignocellulosepartikeln LCP-1) bzw. zu der Mischung aus Lignocellulosepartikeln LCP-1) mit anderen Komponenten gegeben werden. Die Auftragsvorrichtungen können dabei räumlich so angeordnet sein oder zeitlich so geschaltet werden, dass die Zugabe der Komponente C-1 [bzw. der Mischung der Komponente C-1) mit einer oder mehreren Komponenten ausgewählt aus der Gruppe der Komponenten C-2), D) und E)] und die Zugabe der Komponente A) nacheinander, in beliebiger Reihenfolge, erfolgt. Bevorzugt sind die Auftragsvorrichtungen so angeordnet, dass die Komponente C-1) [bzw. die Mischung der Komponente C-1) mit einer oder mehreren Komponenten ausgewählt aus der Gruppe der Komponenten C-2), D) und E)] und die Komponente A) gleichzeitig zu der Mischung aus Lignocellulosepartikeln LCP-1) mit anderen Komponenten gegeben werden. In der Regel wird das dadurch realisiert, dass die Auftragsvorrichtungen sich in unmittelbarer räumlicher Nähe befinden. Dabei können die Auftragsvorrichtungen in einer bevorzugten Ausführungsform auch so ausgerichtet sein, dass sich die Komponenten schon auf dem Weg von den Auftragsvorrichtungen zu den Lignocellulosepartikeln LCP-1) teilweise oder vollständig mischen.

### (2) als Mischung

Die Zugabe als Mischung kann beispielsweise dadurch erfolgen, dass die Komponente C-1) bzw. die Mischung, die Komponente C-1) enthält und die Komponente A) aus separaten Behältern einem Mischaggregat, z.B. Mischbehälter oder statischem Mischer, zugeführt und darin gemischt werden und die so erhaltene Mischung innerhalb von 0,1 bis 3600 Sekunden, bevorzugt 0,1 bis 300 Sekunden, besonders bevorzugt 0,1 bis 60 Sekunden, insbesondere 0,1 bis 10 Sekunden, ganz besonders bevorzugt 0,1 bis 2 Sekunden zu den Lignocellulosepartikeln LCP-1) bzw. zu der Mischung aus Lignocellulosepartikeln LCP-1) mit anderen Komponenten zugegeben wird. Die angegebenen Zeiträume beziehen sich auf die Zeiten von dem Inkontaktbringen der Komponente C-1) bzw. der Mischung die die Komponente C-1) enthält mit der Komponente A) im Mischaggregat bis zu dem Inkontaktbringen der Mischung, die C-1) und A) enthält, mit den Lignocellulosepartikeln LCP-1). Die Zugabe der Mischung zu den Lignocellulosepartikeln LCP-1) bzw. zu der Mischung aus Lignocellulosepartikeln LCP-1) mit anderen Komponenten kann mit Hilfe von üblichen Auftrags-vorrichtungen, z.B. Düsen oder Auftragsteller, erfolgen.

Die Komponenten C-2), D) und E) können auch auf Teilmengen aufgeteilt werden. Diese Teilmengen können zu unterschiedlichen Zeitpunkten und in Abmischungen mit unterschiedlichen Komponenten zugegeben werden.

### Ausführungsformen für (1) getrennt voneinander

Beispielsweise kann man Komponente LCP-1) vorlegen, mit der Komponente C) (hier und im Folgenden ist mit Komponente C) gemeint: Komponente C-1) oder Komponenten C-1) und C-2) gemeinsam oder in beliebiger Reihenfolge) mischen, und anschließend
- Komponente D) und anschließend die Komponenten B) und E) gemeinsam oder in beliebiger Reihenfolge, bevorzugt zuerst Komponente B) und anschließend Komponente A) oder
- Komponente D) und anschließend die Komponente A) und anschließend die Komponenten B) und E) gemeinsam oder in beliebiger Reihenfolge oder
- die Komponenten B), D) und E) gemeinsam oder in beliebiger Reihenfolge, bevorzugt zuerst Komponente B) und anschließend die Komponente A), die Komponente A), anschließend die Komponenten B), D) und E) gemeinsam oder in beliebiger Reihenfolge, bevorzugt zuerst Komponente B) oder
- die Komponenten A) und D) gemeinsam oder in beliebiger Reihenfolge, bevorzugt zuerst Komponente A) und anschließend die Komponenten B) und E) gemeinsam oder in beliebiger Reihenfolge
zugeben.

Beispielsweise kann man Komponente LCP-1) vorlegen, mit der Komponente C) und Komponente D) gemeinsam oder in beliebiger Reihenfolge mischen, und anschließend
- die Komponenten B) und E) gemeinsam oder in beliebiger Reihenfolge, bevorzugt zuerst Komponente B) und anschließend die Komponente A) oder
- die Komponente A), anschließend die Komponenten B) und E) gemeinsam oder in beliebiger Reihenfolge, bevorzugt zuerst Komponente B),
zugeben.

Beispielsweise kann man Komponente LCP-1) vorlegen, mit der Komponente B), anschließend mit der Komponente C) mischen, und anschließend
- Komponente D) und anschließend die Komponente A), anschließend die Komponente E) oder
- die Komponenten D) und E) gemeinsam oder in beliebiger Reihenfolge, bevorzugt zuerst Komponente D), und anschließend die Komponente A) oder
- die Komponenten A) und D) gemeinsam oder in beliebiger Reihenfolge, bevorzugt zuerst Komponente D), und anschließend die Komponente E) oder
- Komponente A) und anschließend die Komponenten D) und E), gemeinsam oder in beliebiger Reihenfolge, bevorzugt zuerst Komponente E),
zugeben.

Beispielsweise kann man Komponente LCP-1) vorlegen, mit der Komponente B), Komponente C) und Komponente D) gemeinsam oder in beliebiger Reihenfolge mischen, und anschließend
- Komponente A) und anschließend Komponente E) oder
- Komponente E) und anschließend Komponente A)
zugeben.

Beispielsweise kann man Komponente LCP-1) vorlegen, mit der Komponente E), anschließend mit der Komponente C) mischen, und anschließend
- Komponente D) und anschließend die Komponenten B) und A) gemeinsam oder in beliebiger Reihenfolge, bevorzugt zuerst Komponente A) und anschließend die Komponenten B) oder
- die Komponenten B), A) und D) gemeinsam oder in beliebiger Reihenfolge, bevorzugt zuerst Komponente A) und anschließend die Komponenten B) und D) gemeinsam oder in beliebiger Reihenfolge
zugeben.

Beispielsweise kann man Komponente LCP-1) vorlegen, mit der Komponente B), anschließend mit der Komponente C) und Komponente D) gemeinsam oder in beliebiger Reihenfolge mischen, und anschließend
- die Komponente A) und anschließend die Komponente E) oder
- die Komponente E) und anschließend die Komponente A)
zugeben.

Beispielsweise kann man Komponente LCP-1) vorlegen, mit der Komponente B) und Komponente E) gemeinsam oder in beliebiger Reihenfolge, anschließend mit der Komponente C) mischen, und anschließend
- die Komponenten A) und D) gemeinsam oder in beliebiger Reihenfolge, bevorzugt zuerst Komponente A) und anschließend die Komponente D),
zugeben.

Beispielsweise kann man Komponente LCP-1) vorlegen, mit der Komponente B) und Komponente E) gemeinsam oder in beliebiger Reihenfolge, anschließend mit der Komponente C) und Komponente D) gemeinsam oder in beliebiger Reihenfolge mischen, und anschließend
- die Komponente A)
zugeben.

Beispielsweise kann man Komponente LCP-1) vorlegen, mit der Komponente C), Komponente A) und Komponente D) gemeinsam oder in beliebiger Reihenfolge mischen, und anschließend
- die Komponenten B) und E) gemeinsam oder in beliebiger Reihenfolge, bevorzugt zuerst Komponente B),
zugeben.

Beispielsweise kann man Komponente LCP-1) vorlegen, mit der Komponente B) mischen, und anschließend
- die Komponenten C) und D) gemeinsam oder in beliebiger Reihenfolge, anschließend die Komponente A) und anschließend die Komponente E),
- die Komponenten C), D) und E) gemeinsam oder in beliebiger Reihenfolge, bevorzugt die gemeinsame Mischung aus C), D) und E) und anschließend die Komponente A),
- die Komponente A) und anschließend die Komponenten C), D), E) gemeinsam oder in beliebiger Reihenfolge, bevorzugt die gemeinsame Mischung aus C), D) und E),
zugeben.

Bevorzugt wird LCP-1) gemeinsam mit Komponente B) vorgelegt und mit Komponente C-1) vermischt und anschließend mit den Komponenten C-2), D) und E) gemeinsam oder in beliebiger Reihenfolge und anschließend Komponente A) vermischt oder LCP-1) gemeinsam mit Komponente B) vorgelegt mit den Komponenten C-1) und D) gemeinsam oder in beliebiger Reihenfolge vermischt und anschließend mit Komponente A) und anschließend Komponente C-2) und E) gemeinsam oder in beliebiger Reihenfolge vermischt oder LCP-1) gegebenenfalls gemeinsam mit Komponente B) vorgelegt und mit den Komponenten C-1), C-2), D) und E) gemeinsam oder in beliebiger Reihenfolge vermischt und anschließend mit Komponente A) vermischt oder LCP-1) gegebenenfalls gemeinsam mit Komponente B) gemeinsam vorgelegt und mit Komponente A) vermischt und anschließend mit den Komponenten C-1), C-2), D) und E) gemeinsam oder in beliebiger Reihenfolge vermischt, oder LCP-1), gemeinsam mit Komponente B) gemeinsam vorgelegt, und mit Komponente E) anschließend mit Komponente A) und anschließend, mit den Komponenten C-1), C-2) und D) gemeinsam oder in beliebiger Reihenfolge vermischt, oder LCP-1), gemeinsam mit Komponente B) gemeinsam vorgelegt, und mit Komponente C-2) anschließend mit Komponente A) und anschließend, mit den Komponenten C-1), D) und E) gemeinsam oder in beliebiger Reihenfolge vermischt.

Besonders bevorzugt wird LCP-1) gemeinsam mit Komponente B) vorgelegt und mit den Komponenten C-1) und D) gemeinsam oder in beliebiger Reihenfolge vermischt und anschließend mit Komponente A) und anschließend Komponente C-2) und E) gemeinsam oder in beliebiger Reihenfolge vermischt oder LCP-1) gemeinsam mit Komponente B) vorgelegt und mit den Komponenten C-1), C-2), D) und E) gemeinsam oder in beliebiger Reihenfolge vermischt und anschließend mit Komponente A) vermischt oder LCP-1), gemeinsam mit Komponente B) gemeinsam vorgelegt, und mit Komponente A) vermischt und anschließend, mit den Komponenten C-1), C-2), D) und E) gemeinsam oder in beliebiger Reihenfolge, vermischt.

### Ausführungsformen für (2) als Mischung

Beispielsweise kann man Komponente LCP-1) vorlegen, mit der Komponente B) mischen, und anschließend
- eine Mischung der Komponente C-1) mit der Komponente A) und anschließend
- die Komponente C-2), und anschließend
- die Komponente D) und E) gemeinsam oder in beliebiger Reihenfolge
zugeben.

Beispielsweise kann man Komponente LCP-1) vorlegen, mit der Komponente B) mischen, und anschließend
- eine Mischung der Komponente C-1) mit der Komponente A), und anschließend
- die Komponente D) und E) gemeinsam oder in beliebiger Reihenfolge, und anschließend
- die Komponente C-2)
zugeben.

Beispielsweise kann man Komponente LCP-1) vorlegen, mit der Komponente B) mischen, und anschließend
- die Komponente D) und E) gemeinsam oder in beliebiger Reihenfolge, und anschließend
- eine Mischung der Komponente C-1) mit der Komponente A), und anschließend
- die Komponente C-2)
zugeben.

Beispielsweise kann man Komponente LCP-1) vorlegen, mit der Komponente B) mischen, und anschließend
- die Komponente D) und E) gemeinsam oder in beliebiger Reihenfolge, und anschließend
- die Komponente C-2), und anschließend
- eine Mischung der Komponente C-1) mit der Komponente A)
zugeben.

Beispielsweise kann man Komponente LCP-1) vorlegen, mit der Komponente B) mischen, und anschließend
- die Komponente C-2), und anschließend
- eine Mischung der Komponente C-1) mit der Komponente A) und anschließend
- die Komponente D) und E) gemeinsam oder in beliebiger Reihenfolge
zugeben.

Beispielsweise kann man Komponente LCP-1) vorlegen, mit der Komponente B) mischen, und anschließend
- die Komponente C-2), und anschließend
- die Komponente D) und E) gemeinsam oder in beliebiger Reihenfolge, und anschließend
- eine Mischung der Komponente C-1) mit der Komponente A)
zugeben.

Beispielsweise kann man Komponente LCP-1) vorlegen, mit der Komponente B) mischen, und anschließend
- eine Mischung der Komponente C-1), D) und A) und anschließend
- die Komponente C-2) und E) gemeinsam oder in beliebiger Reihenfolge
zugeben.

In einer bevorzugten Ausführungsform beispielsweise kann man Komponente LCP-1) vorlegen, mit der Komponente B) mischen, und anschließend
- die Komponente E), und anschließend
- eine Mischung der Komponente C-1), D) und A), und anschließend
- die Komponente C-2)
zugeben.

Beispielsweise kann man Komponente LCP-1) vorlegen, mit der Komponente B) mischen, und anschließend
- die Komponente C-2) und E) gemeinsam oder in beliebiger Reihenfolge, und anschließend
- eine Mischung der Komponente C-1), D) und A)
zugeben.

In einer bevorzugten Ausführungsform beispielsweise kann man Komponente LCP-1) vorlegen, mit der Komponente B) mischen, und anschließend
- die Komponente C-2), und anschließend
- eine Mischung der Komponente C-1), D) und A) und anschließend
- die Komponente E)
zugeben.

Beispielsweise kann man Komponente LCP-1) vorlegen, mit der Komponente B) mischen, und anschließend
- die Komponente C-2), und anschließend
- eine Mischung der Komponente C-1), D), E) und A)
zugeben.

Beispielsweise kann man Komponente LCP-1) vorlegen, mit der Komponente B) mischen, und anschließend
- eine Mischung der Komponente C-1), D), E) und A), und anschließend
- die Komponente C-2)
zugeben.

In einer bevorzugten Ausführungsform beispielsweise kann man Komponente LCP-1) vorlegen, mit der Komponente B) mischen, und anschließend
- einen Teil der Komponente E), und anschließend
- eine Mischung der Komponente C-1), D), A) und eines Teils der Komponente E) und anschließend
- die Komponente C-2)
zugeben.

In einer bevorzugten Ausführungsform beispielsweise kann man Komponente LCP-1) vorlegen, mit der Komponente B) mischen, und anschließend
- die Komponente C-2), und anschließend
- eine Mischung der Komponente C-1), D), A) und eines Teils der Komponente E) und anschließend
- einen Teil der Komponente E)
zugeben.

In einer bevorzugten Ausführungsform beispielsweise kann man Komponente LCP-1) vorlegen, mit der Komponente B) mischen, und anschließend
- einen Teil der Komponente E) und einen Teil der Komponente D) gemeinsam oder in beliebiger Reihenfolge und anschließend
- eine Mischung der Komponente C-1), A), eines Teils der Komponente D) und eines Teils der Komponente E) und anschließend
- die Komponente C-2)
zugeben.

In einer bevorzugten Ausführungsform beispielsweise kann man Komponente LCP-1) vorlegen, mit der Komponente B) mischen, und anschließend
- die Komponente C-2), und anschließend
- eine Mischung der Komponente C-1), A), eines Teils der Komponente D) und eines Teils der Komponente E) und anschließend
- einen Teil der Komponente E) und einen Teil der Komponente D) gemeinsam oder in beliebiger Reihenfolge

### Mischen der Komponenten für den die Deckschichten

Die Komponente G-1), die gegebenenfalls in einem separaten Schritt mit einer oder mehreren Komponenten ausgewählt aus den Gruppen der Komponenten G-2), H) und I) gemischt wurde, und die Komponente F, können entweder
(1) getrennt voneinander oder
(2) als Mischung,
bevorzugt als Mischung zu den Lignocellulosepartikeln LCP-2) bzw. zu der Mischung aus Lignocellulosepartikeln LCP-2) mit anderen Komponenten gegeben werden.

Was unter (1) getrennt voneinander und (2) als Mischung zu verstehen ist, wurde bereits für die Mischung der Komponente C-1) [bzw. C-1) enthaltende Mischung] und Komponente A) erläutert und gilt hier entsprechend.

Die Komponenten G-2), H) und I) können auch auf Teilmengen aufgeteilt werden. Diese Teilmengen können zu unterschiedlichen Zeitpunkten und in Abmischung(en) mit unterschiedlichen Komponenten zugegeben werden.

Beispielsweise kann man Komponente LCP-2) vorlegen, mit der Komponente G) (hier und im Folgenden ist mit Komponente G) gemeint: Komponente G-1) oder Komponenten G-1) und G-2) gemeinsam oder in beliebiger Reihenfolge) mischen, und anschließend
- Komponente H) und anschließend die Komponente F) und anschließend die Komponente I) oder
- eine Mischung aus den Komponenten H) und I) gemeinsam oder in beliebiger Reihenfolge, bevorzugt zuerst Komponente H) und anschließend die Komponente I), anschließend Komponente F) oder
- eine Mischung aus F) und H) gemeinsam oder in beliebiger Reihenfolge und anschließend die Komponente I)
zugeben.

Beispielsweise kann man Komponente LCP-2) vorlegen, mit der Komponente G) und Komponente H) gemeinsam oder in beliebiger Reihenfolge mischen, und anschließend
- die Komponente F) und anschließend die Komponente I) oder
- die Komponente I) und anschließend die Komponente F)
zugeben.

Beispielsweise kann man Komponente LCP-2) vorlegen, mit der Komponente I), anschließend mit der Komponente G) mischen, und anschließend
- die Komponente H) und anschließend die Komponente F) oder
- eine Mischung aus den Komponenten F) und H) gemeinsam oder in beliebiger Reihenfolge, bevorzugt zuerst Komponente F) und anschließend die Komponente H) oder
- eine Mischung aus F) und H) gemeinsam oder in beliebiger Reihenfolge

Beispielsweise kann man Komponente LCP-2) vorlegen und anschließend
- die Komponente F) und anschließend die Komponenten G), H), I) gemeinsam oder in beliebiger Reihenfolge, bevorzugt als gemeinsame Mischung, oder
- die Komponenten G), H) und I) gemeinsam oder in beliebiger Reihenfolge, bevorzugt als gemeinsame Mischung, und anschließend die Komponente F)
zugeben.

Besonders bevorzugt wird LCP-2) vorgelegt und mit einer Mischung aus Komponente G) und H) gemeinsam oder in beliebiger Reihenfolge vermischt und anschließend mit Komponente F) und anschließend mit Komponente I) vermischt oder LCP-2) vorgelegt und mit einer Mischung aus Komponenten G), H) und I) gemeinsam oder in beliebiger Reihenfolge vermischt und anschließend mit Komponente G vermischt oder LCP-2) vorgelegt und mit Komponente F) vermischt und anschließend mit einer Mischung aus Komponenten G), H) und I) gemeinsam oder in beliebiger Reihenfolge vermischt.

Das Mischen der Komponenten A) bis E) mit der Komponente LCP-1) bzw. F) bis I) mit der Komponente LCP-2) kann nach den in der Holzwerkstoffindustrie bekannte Verfahren, wie sie beispielsweise in M. Dunky, P. Niemz, Holzwerkstoffe und Leime, Seite 118 bis 119 und Seite 145, Springer Verlag Heidelberg, 2002 beschrieben sind, erfolgen.

Das Mischen kann durch Aufsprühen der Komponenten oder Mischungen der Komponenten auf die Lignocellulosepartikel in Vorrichtungen wie schnell laufenden Ringmischern mit Leimzugabe über eine Hohlwelle (Innenbeleimung) oder schnell laufenden Ringmischern mit Leimzugabe von außen über Düsen (Außenbeleimung).

Werden Lignocellulosefasern als Komponente LCP-1) bzw. LCP-2) eingesetzt, kann das Aufsprühen auch in der Blowline nach dem Refiner erfolgen.

Werden Lignocellulosestreifen (Strands) als Komponente LCP-1) bzw. LCP-2) eingesetzt, erfolgt das Aufsprühen in der Regel in großvolumigen, langsam laufenden Mischern.

Das Mischen kann auch durch Aufsprühen in einem Fallschacht erfolgen, wie es beispielsweise in DE-A-10 247 412 oder DE-A-10 104 047 beschrieben ist, oder durch Besprühen eines Vorhangs aus Lignocellulosepartikeln, wie es in der Evojet-Technologie der Dieffenbacher GmbH realisiert ist.

### Verfahrensschritt (II) - Streuen der in Verfahrensschritt (I) hergestellten Mischung(en) zu einer Matte

Für den einschichtigen Lignocellulosewerkstoff wird die erhaltene Mischung LCP-1), A), B), C), D) und E) zu einer Matte gestreut.

Für den mehrschichtigen Lignocellulosewerkstoff werden die erhaltenen Mischungen der Komponenten LCP-1), A), B), C), D) und E) und die Mischungen der Komponenten LCP-2), F), G), H) und I) übereinander zu einer Matte gestreut, so dass sich der Aufbau der mehrschichtigen Lignocellulosewerkstoffe [nach dem Muster (A), (B), (C)] ergibt. Dabei werden in der Regel die untere Deckschicht, bzw. die unteren Deckschichten, beginnend mit der äußersten Deckschicht bis der dem Kern nächstliegenden unteren Deckschicht, darauf die Kernschicht und anschließend die oberen Deckschichten, beginnend mit der dem Kern nächstliegenden oberen Deckschicht bis der äußersten Deckschicht gestreut. Bevorzugt werden eine untere Deckschicht, darauf die Kernschicht und anschließend eine obere Deckschicht gestreut. Die Kernschicht kann in einem oder mehreren Schritten gestreut werden, bevorzugt in zwei Schritten.

In der Regel streut man die Mischungen dazu direkt auf eine Unterlage, z.B. auf ein Formband. Die Streuung kann nach an sich bekannten Methoden wie Wurfsichtstreuung oder Windsichtstreuung, oder z.B. mit Rollensystemen (siehe beispielsweise M. Dunky, P. Niemz, Holzwerkstoffe und Leime, Seite 119 bis 121, Springer Verlag Heidelberg, 2002) diskontinuierlich oder kontinuierlich, bevorzugt kontinuierlich, durchgeführt werden.

### Verfahrensschritt (III) - gegebenenfalls Vorverdichtung der gestreuten Matte

Nach dem Streuen jeder einzelnen Schicht kann eine Vorverdichtung stattfinden. Bei den mehrschichtigen Lignocellulosewerkstoffen kann in der Regel nach dem Streuen jeder einzelnen Schicht eine Vorverdichtung erfolgen, bevorzugt wird die Vorverdichtung nach dem Streuen aller Schichten übereinander durchgeführt.

Die Vorverdichtung kann nach dem Fachmann bekannten Verfahren erfolgen, wie sie beispielsweise in M. Dunky, P. Niemz, Holzwerkstoffe und Leime, Springer Verlag Heidelberg, 2002, Seite 819 oder in H.-J. Deppe, K. Ernst, MDF - Mitteldichte Faserplatte, DRW-Verlag, 1996, Seiten 44, 45 und 93 oder in A. Wagenführ, F. Scholz, Taschenbuch der Holztechnik, Fachbuchverlag Leipzig, 2012, Seite 219, beschrieben sind.

Während oder nach der Vorverdichtung und vor dem Verfahrensschritt IV) kann in einem Vorerwärmungsschritt Energie mit einer oder mehreren beliebigen Energiequellen in die Matte eingebracht werden. Als Energiequellen eignen sich Heißluft, Wasserdampf, Dampf/Luft-Gemische oder elektrische Energie (Hochfrequentes Hochspannungsfeld oder Mikrowellen). Die Matte wird dabei im Kern auf 40 bis 130°C, bevorzugt auf 50 bis 100°C, besonders bevorzug auf 55 bis 75°C erwärmt. Die Vorerwärmung mit Wasserdampf und Dampf/Luftgemischen bei mehrschichtigen Lignocellulosewerkstoffen kann auch so durchgeführt werden, dass nur die Deckschichten erwärmt werden, der Kern jedoch nicht. Bevorzugt wird auch bei mehrschichtigen Lignocellulosewerkstoffen der Kern erwärmt.

Erfolgt nach dem Vorverdichten eine Vorerwärmung, kann das Auffedern der Matte während der Erwärmung dadurch verhindert werden, dass die Erwärmung in einem nach oben und unten begrenzten Raum durchgeführt wird. Die Begrenzungsflächen sind dabei so ausgeführt, dass der Energieeintrag möglich ist. Beispielsweise können perforierte Kunststoffbänder oder Stahlnetze verwendet werden, die das Durchströmen von heißer Luft, Wasserdampf oder Wasserdampf-Luft-Gemischen ermöglichen. Gegebenenfalls sind die Begrenzungsflächen so ausgeführt, dass sie einen Druck auf die Matte ausüben, der so groß ist, dass das Auffedern während der Erwärmung verhindert wird.

In der Regel erfolgt nach dem Vorverdichten keine Vorerwärmung, das heißt, dass die gestreute Matte nach dem Verfahrensschritt (III) eine niedrigere Temperatur als oder die gleiche Temperatur wie vor dem Verfahrensschritt (III) aufweist.

Die Verdichtung kann in einem, zwei oder mehreren Schritten erfolgen.

Die Vorverdichtung erfolgt in der Regel bei einem Druck von 1 bis 30 bar, bevorzugt 2 bis 25 bar, besonders bevorzugt 3 bis 20 bar.

### Verfahrensschritte (IV) - Heißpressen der gegebenenfalls vorverdichteten Matte

Im Verfahrensschritt (IV) wird die Dicke der Matte durch Anlegen eines Pressdrucks (weiter) verringert. Dabei wird die Temperatur der Matte durch Eintragen von Energie erhöht. Im einfachsten Fall wird ein konstanter Pressdruck angelegt und gleichzeitig durch eine Energiequelle konstanter Leistung erwärmt. Sowohl der Energieeintrag als auch die Verdichtung mittels Pressdruck kann aber auch zu jeweils unterschiedlichen Zeitpunkten und in mehreren Stufen erfolgen. Der Energieeintrag beim Verfahrensschritt (IV) erfolgt in der Regel
a) durch Anlegen eines hochfrequenten elektrischen Feldes und/oder
b) durch Heißpressen, also mittels Wärmeübergang von erwärmten Flächen, beispielsweise Pressblechen, auf die Matte während des Pressvorgangs,
bevorzugt b) durch Heißpressen.

### a) Energieeintrag durch Anlegen eines hochfrequenten elektrischen Feldes

Beim Energieeintrag durch Anlegen eines hochfrequenten elektrischen Feldes wird die Matte so erwärmt, dass nach Abschalten des hochfrequenten elektrischen Feldes im Verfahrensschritt (IV) die Schicht des Kerns eine Temperatur von mehr als 90°C aufweist und diese Temperatur in weniger als 40 Sekunden, bevorzugt weniger als 20 Sekunden, besonders bevorzugt weniger als 12,5 Sekunden, insbesondere weniger als 7,5 Sekunden pro mm Plattendicke d ab dem Anlegen des hochfrequenten elektrischen Feldes erreicht wird, wobei d die Dicke der Platte nach Verfahrensschritt (IV) ist.

Wenn das hochfrequente elektrische Feld abgeschaltet wird, beträgt die Temperatur im Kern mindestens 90°C, also 90 bis 170°C, bevorzugt mindestens 100°C, also 100 bis 170°C, besonders bevorzugt mindestens 110°C, also 110 bis 170°C, insbesondere mindestens 120°C, also 120 bis 170°C.

Bei dem angelegten hochfrequenten elektrischen Feld kann es sich um Mikrowellenstrahlung oder um ein hochfrequentes elektrisches Feld handeln, das nach Anlegen einer hochfrequenten Wechselspannungsfeldes an einen Plattenkondensator zwischen den beiden Kondensatorplatten entsteht.

In einer besonders bevorzugten Ausführungsform kann zunächst ein Verdichtungsschritt und danach das Erwärmen durch Anlegen eines hochfrequenten Wechselspannungsfeldes durchgeführt werden. Dieser Vorgang kann entweder kontinuierlich oder diskontinuierlich, bevorzugt kontinuierlich erfolgen.

Hierzu kann die gestreute und verdichtete Matte mittels eines Förderbandes durch einen Bereich zwischen parallel angeordneten Plattenkondensatoren durchgeführt werden.

Eine Vorrichtung für einen kontinuierlichen Prozess, um die Erwärmung mittels Anlegen eines hochfrequenten elektrischen Feldes nach der Verdichtung innerhalb der gleichen Maschine zu realisieren, ist beispielsweise in WO-A-97/28936 beschrieben.

Die Erwärmung unmittelbar nach dem Verdichtungsschritt kann auch in einer diskontinuierlich arbeitenden Hochfrequenz-Presse erfolgen, z.B. in einer Hochfrequenz-Presse, beispielsweise in der Presse HLOP 170 der Firma Hoefer Presstechnik GmbH.

Erfolgt die Erwärmung nach dem Verdichten, kann das Auffedern der Matte während der Erwärmung dadurch zurückgedrängt, minimiert bzw. verhindert werden, dass die Erwärmung in einem nach oben und unten begrenzten Raum durchgeführt wird. Die Begrenzungsflächen sind dabei so ausgeführt, dass der Energieeintrag möglich ist. Gegebenenfalls sind die Begrenzungsflächen so ausgeführt, dass sie einen Druck auf die Matte ausüben, der so groß ist, dass das Auffedern während der Erwärmung verhindert wird.

In einer besonderen Ausführungsform für einen kontinuierlichen Prozess handelt es sich bei diesen Begrenzungsflächen um Pressbänder, die durch Rollen angetrieben werden. Hinter diesen Pressbändern sind die Platten der Kondensatoren angeordnet. Die Matte wird dabei durch ein Paar von Kondensatorplatten geleitet, wobei sich zwischen Matte und oberer Kondensatorplatte das eine Pressband, zwischen Matte und unterer Kondensatorplatte das andere Pressband befindet. Eine der beiden Kondensatorplatten kann geerdet sein, so dass die Hochfrequenz-Heizung nach dem Prinzip der unsymmetrischen Einspeisung arbeitet. Bei den mehrschichtigen Lignocellulosewerkstoffen können die Deckschichten DS-A und DS-C nach Verfahrensschritt (IV) eine andere Temperatur als der Kern-B aufweisen. In der Regel beträgt die Temperaturdifferenz zwischen 0 und 50°C.

### b) Energieeintrag durch Heißpressen

Der Energieeintrag durch Heißpressen erfolgt üblicherweise durch Kontakt mit beheizten Pressflächen, die Temperaturen von 80 bis 300°C, bevorzugt 120 bis 280°C, besonders bevorzugt 150 bis 250°C aufweisen, wobei während des Energieeintrags bei einem Druck von 1 bis 50 bar, bevorzugt 3 bis 40 bar, besonders bevorzugt 5 bis 30 bar gepresst wird. Das Pressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden Echterdingen, Seite 232 bis 254, und "MDF- Mitteldichte Faserplatten" H.-J. Deppe, K. Ernst, 1996, DRW- Verlag Weinbrenner, Leinfelden-Echterdingen, Seite 93 bis 104). Bevorzugt werden kontinuierliche Pressverfahren, beispielsweise mit Doppelbandpressen, verwendet. Die Pressdauer beträgt normalerweise 2 bis 15 Sekunden pro mm Plattendicke, bevorzugt 2 bis 10 Sekunden, besonders bevorzugt 2 bis 6 Sekunden, insbesondere 2 bis 4 Sekunden, kann davon jedoch auch deutlich abweichen und auch bis zu mehreren Minuten, z.B. bis zu 5 Minuten dauern.

Erfolgt der Energieeintrag im Verfahrensschritt (IV) durch a) Anlegen eines hochfrequenten elektrischen Feldes und durch b) Heißpressen, dann wird bevorzugt zunächst Schritt a) und danach Schritt b) ausgeführt.

Die Komponenten des Kerns LCP-1), A), B), C-1), C-2), D), E) und die Komponenten der Deckschichten LCP-2), F), G-1), G-2), H), I) haben folgende Bedeutungen.

### Komponente LCP-1) und LCP-2):

Als Rohstoff für die Lignocellulosepartikel LCP-1) und LCP-2) eignet sich jede beliebige Holzart oder deren Mischungen, beispielsweise Fichten-, Buchen-, Kiefern-, Lärchen-, Linden-, Pappeln-, Eukalyptus-, Eschen-, Kastanien-, Tannenholz oder deren Mischungen, bevorzugt Fichten-, Buchenholz oder deren Mischungen, insbesondere Fichtenholz, und können beispielsweise Holzteile wie Holzlagen, Holzstreifen (Strands), Holzspäne, Holzfasern, Holzstaub oder deren Mischungen, bevorzugt Holzspäne, Holzfasern, Holzstaub und deren Mischungen, besonders bevorzugt Holzspäne, Holzfasern oder deren Mischungen - wie sie für die Herstellung von Spanplatten, MDF (Mitteldichte Faserplatten) und HDF (Hochdichte Faserplatten) eingesetzt werden - sein, ganz besonders bevorzugt Holzspäne Die Lignocellulosepartikel können auch von holzhaltigen Pflanzen wie Flachs, Hanf, Getreide oder anderen Einjahrespflanzen stammen, bevorzugt von Flachs oder Hanf. Besonders bevorzugt werden Holzspäne eingesetzt, wie sie bei der Herstellung von Spanplatten verwendet werden.

Ausgangsmaterialien für die Lignocellulosepartikel sind üblicherweise Rundhölzer, Durchforstungshölzer, Resthölzer, Waldholzabfälle, Industrieresthölzer, Gebrauchthölzer, Produktionsabfälle aus der Holzwerkstoffproduktion, gebrauchte Holzwerkstoffe sowie lignocellulosehaltige Pflanzen. Die Aufbereitung zu den gewünschten lignocellulosehaltigen Partikeln, beispielsweise zu Holzpartikeln wie Holzspäne oder Holzfasern, kann nach an sich bekannten Verfahren erfolgen (z.B. M. Dunky, P. Niemz, Holzwerkstoffe und Leime, Seite 91 bis 156, Springer Verlag Heidelberg, 2002).

Die Größe der Lignocellulosepartikel kann in weiten Grenzen variiert werden und in weiten Grenzen schwanken.

Wenn es sich bei den Lignocellulosepartikeln LCP-1) und LCP-2) um Lignocellulosefasern handelt, dann ist die volumengewichtete mittlere Faserlänge der Komponente LCP-2) der Deckschichten bevorzugt kleiner oder gleich, besonders bevorzugt kleiner als die der volumengewichteten mittleren Faserlänge der Komponente LCP-1) im Kern der mehrschichtigen Lignocellulosewerkstoffe. Das Verhältnis der volumengewichteten mittleren Faserlängen (x̅_{Strecke}) der Komponente LCP-2) zur volumengewichteten mittleren Faserlängen (x̅_{Strecke}) der Komponente LCP-1) kann in weiten Grenzen variiert werden und liegt in der Regel bei 0,1:1 bis 1:1, bevorzugt 0,5:1 bis 1:1, besonders bevorzugt 0,8:1 bis 1:1.

Die volumengewichtete mittlere Faserlänge (x̅_{Strecke}) der Komponente LCP-1) beträgt in der Regel 0,1 bis 20 mm, bevorzugt 0,2 bis 10 mm, besonders bevorzugt 0,3 bis 8 mm, ganz besonders bevorzugt 0,4 bis 6 mm.

Die volumengewichtete mittlere Faserlänge x̅_{Strecke} wird mittels digitaler Bildanalyse bestimmt. Beispielsweise kann ein Gerät der Reihe Camsizer® der Firma Retsch Technology verwendet werden. Dabei wird von jeder einzelnen Faser einer representativen Probe x_{Strecke} bestimmt. x_{Strecke} wird berechnet aus der Fläche der Partikelprojektion A und dem Martin-Durchmesser X_{Ma_min}. Dabei gilt x_{Strecke} = x_{Ma_min} /A. Aus den Einzelwerten wird der volumengewichtete Mittelwert x̅_{Strecke} gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Wenn es sich bei den Lignocellulosepartikeln LCP-1) und LCP-2) um Lignocellulosestreifen (Strands) oder Lignocellulosespäne handelt, dann ist der volumengewichtete mittlere Partikeldurchmesser der Komponente LCP-2) der Deckschichten bevorzugt kleiner oder gleich, besonders bevorzugt kleiner als die dem volumengewichteten mittleren Partikeldurchmesser der Komponente LCP-1) im Kern der mehrschichtigen Lignocellulosewerkstoffe. Das Verhältnis des volumengewichtete mittlere Partikeldurchmesser x̅_{Fe max} der Komponente LCP-2) zum volumengewichteten mittleren Partikeldurchmesser x̅_{Fe max} der Komponente LCP-1) kann in weiten Grenzen variiert werden und liegt in der Regel bei 0,01:1 bis 1:1, bevorzugt 0,1:1 bis 0,95:1, besonders bevorzugt 0,5:1 bis 0,9:1.

Der volumengewichtete mittlere Partikeldurchmesser x̅_{Fe max} der Komponente LCP-1) beträgt in der Regel 0,5 bis 100 mm, bevorzugt 1 bis 50 mm, besonders bevorzugt 2 bis 30 mm, ganz besonders bevorzugt 3 bis 20 mm.

Der volumengewichtete mittlere Partikeldurchmesser x̅_{Fe max} wird mittels digitaler Bildanalyse bestimmt. Beispielsweise kann ein Gerät der Reihe Camsizer® der Firma Retsch Technology verwendet werden. Dabei wird von jedem einzelnen Lignocellulosestreifen (Strand) oder jedem einzelnen Lignocellulosespan einer representativen Probe x_{Fe max} bestimmt. x_{Fe max} ist der größte Feret-Durchmesse eines Partikels (ermittelt aus verschiedenen Messrichtungen). Aus den Einzelwerten wird der volumengewichtete Mittelwert x̅_{Fe max} gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Setzt man Mischungen aus Holzspänen und anderen Lignocellulosepartikeln ein, z.B. Mischungen aus Holzspänen und Holzfasern, oder aus Holzspänen und Holzstaub, so beträgt der Anteil an Holzspänen der Komponente LCP-1) bzw. der Komponente LCP-2) in der Regel mindestens 50 Gew.-%, also 50 bis 100 Gew.-%, bevorzugt mindestens 75 Gew.-%, also 75 bis 100 Gew.-%, besonders bevorzugt mindestens 90 Gew.-%, also 90 bis 100 Gew.-%.

Die mittlere Dichten der Komponenten LCP-1) und LCP-2) liegen unabhängig voneinander in der Regel bei 0,4 bis 0,85 g/cm³, bevorzugt bei 0,4 bis 0,75 g/cm³, insbesondere bei 0,4 bis 0,6 g/cm³. Diese Angaben beziehen sich auf die Normal-Rohdichte nach Lagerung im Normalklima (20°C, 65% Luftfeuchtigkeit).

Die Komponenten LCP-1) und LCP-2) können unabhängig voneinander die üblichen geringen Mengen Wasser von 0 bis 10 Gew.-%, bevorzugt 0,5 bis 8 Gew.-%, besonders bevorzugt 1 bis 5 Gew.-% (in einer üblichen geringen Schwankungsbreite von 0 bis 0,5 Gew.-%, bevorzugt 0 bis 0,4 Gew.-%, besonders bevorzugt 0 bis 0,3 Gew.-%) enthalten. Diese Mengenangabe bezieht sich auf 100 Gew.-% absolut trockene Holzsubstanz und beschreibt den Wassergehalt der Komponente LCP-1) bzw. LCP-2) nach dem Trocknen (nach üblichen dem Fachmann bekannten Methoden) unmittelbar vor dem Mischen mit anderen Komponenten.

In einer weiteren bevorzugten Ausführungsform werden für die Deckschichten Lignocellulosefasern als Lignocellulosepartikel LCP-2) und für den Kern Lignocellulosestreifen (Strands) oder Lignocellulosespäne, besonders bevorzugt Lignocellulosespäne, insbesondere Lignocellulosespäne mit einem volumengewichteteten mittleren Partikeldurchmesser x̅_{Fe max} von 2 bis 30 mm als Lignocellulosepartikel LCP-1) verwendet.

### Komponente B):

Als expandierte Kunststoffteilchen der Komponente B) eignen sich expandierte Kunststoffteilchen, bevorzugt expandierte thermoplastische Kunststoffteilchen mit einer Schüttdichte von 10 bis 150 kg/m³, bevorzugt 30 bis 130 kg/m³, besonders bevorzugt 35 bis 110 kg/m³, insbesondere 40 bis 100 kg/m³ (ermittelt durch Wiegen eines mit dem Schüttgut gefüllten definierten Volumens).

Expandierte Kunststoffteilchen der Komponente B) werden in der Regel in Form von Kugeln oder Perlen mit einem mittleren Durchmesser von 0,01 bis 50 mm, bevorzugt 0,25 bis 10 mm, besonders bevorzugt 0,4 bis 8,5 mm, insbesondere 0,4 bis 7 mm eingesetzt. In einer bevorzugten Ausführungsform weisen die Kugeln eine kleine Oberfläche pro Volumen auf, beispielsweise in Form eines sphärischen oder elliptischen Partikels und sind vorteilhaft geschlossenzellig. Die Offenzelligkeit nach DIN-ISO 4590 beträgt in der Regel nicht mehr als 30%, also 0 bis 30%, bevorzugt 1 bis 25%, besonders bevorzugt 5 bis 15%.

Geeignete Polymere, die den expandierbaren oder expandierten Kunststoffteilchen zugrunde liegen, sind in der Regel alle bekannten Polymere oder deren Gemische, vorzugsweise thermoplastische Polymere oder deren Gemische, die sich verschäumen lassen. Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, C₂- bis C₁₀-Olefinhomopolymere, C₂- bis C₁₀-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Des Weiteren können den Polymeren, vorzugsweise den Thermoplasten, die den expandierbaren oder expandierten Kunststoffteilchen der Komponente B) zugrunde liegen übliche Additive, zum Beispiel UV-Stabilisatoren, Antioxidantien, Beschichtungsmittel, Hydrophobierungsmittel, Keimbildner, Weichmacher, Flammschutzmittel, lösliche und unlösliche anorganische und/oder organische Farbstoffe zugesetzt sein.

Die Komponente B) kann üblicherweise wie folgt erhalten werden:
Geeignete Polymere können mit einem ausdehnungsfähiges Medium (auch "Treibmittel" genannt) oder enthaltend ein ausdehnungsfähiges Medium durch Einwirkung von Mikrowellen-, Wärmenergie, Heißluft, vorzugsweise Dampf, und/oder Druckänderung expandiert (oft auch als "aufgeschäumt" bezeichnet) (Kunststoff Handbuch 1996, Band 4 "Polystyrol", Hanser 1996, Seiten 640 bis 673 oder US-A-5 112 875) werden. Hierbei dehnt sich in der Regel das Treibmittel aus, die Partikel nehmen an Größe zu und Zellstrukturen entstehen. Dieses Expandieren kann in üblichen Aufschäumvorrichtungen, oft als "Vorschäumer" bezeichnet, durchgeführt werden. Derartige Vorschäumer können ortsfest installiert oder aber mobil sein. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert. Die oben genannten kompakten Kunststoffteilchen, hierin auch "expandierbare Kunststoffteilchen" genannt, enthalten, im Gegensatz zu den expandierten Kunststoffteilchen, in der Regel keine Zellstrukturen. Die expandierten Kunststoffteilchen haben in der Regel nur noch einen geringen Gehalt an Treibmittel von 0 bis 5 Gew.-%, bevorzugt 0,5 bis 4 Gew.-%, besonders bevorzugt 1 bis 3 Gew.-% bezogen auf die Gesamtmasse Kunststoff und Treibmittel. Die so erhaltenen expandierten Kunststoffteilchen können zwischengelagert werden oder ohne weitere Zwischenschritte zur Herstellung der Komponente A weiterverwendet werden. Zum Expandieren der expandierbaren Kunststoffteilchen können alle dem Fachmann bekannten Treibmittel verwendet werden, beispielsweise aliphatische C₃- bis C₁₀-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe, bevorzugt n-Pentan, Isopentan, Neopentan und Cyclopentan, besonders bevorzugt ein handelsübliches Pentanisomerengemisch aus n-Pentan und Isopentan.

Der Gehalt an Treibmittel in den expandierbaren Kunststoffteilchen liegt im allgemeinen im Bereich von 0,01 bis 7 Gew.-%, vorzugsweise 0,6 bis 5 Gew.-%, besonders bevorzugt 1,1 bis 4 Gew.-%, jeweils bezogen auf die treibmittelhaltigen expandierbaren Kunststoffteilchen.

In einer bevorzugten Ausführungsform verwendet man Styrolhomopolymerisat (hierin auch einfach "Polystyrol" genannt), Styrolcopolymerisat oder deren Mischungen als einzigen Kunststoff in der Komponente B).

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation kann Styrol, gegebenenfalls unter Zusatz weiterer Comonomere in wässriger Suspension in Gegenwart eines üblichen Suspensionsstabilisators mittels radikalbildender Katalysatoren polymerisiert werden. Das Treibmittel und gegebenenfalls weitere übliche Zusatzstoffe können dabei bei der Polymerisation mit vorgelegt, im Laufe der Polymerisation oder nach beendeter Polymerisation dem Ansatz zugefügt werden. Die erhaltenen perlförmigen, mit Treibmittel imprägnierten, expandierbaren Styrolpolymerisate können nach beendeter Polymerisation von der wässrigen Phase abgetrennt, gewaschen, getrocknet und gesiebt werden.

Bei dem Extrusionsverfahren kann das Treibmittel beispielsweise über einen Extruder in das Polymer eingemischt, durch eine Düsenplatte gefördert und unter Druck zu Partikeln oder Strängen granuliert werden.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5 112 875 beschrieben, auf das hierin ausdrücklich Bezug genommen wird.

Wie beschrieben können auch Styrolcopolymerisate eingesetzt werden. Vorteilhaft weisen diese Styrolcopolymerisate mindestens 50 Gew.-%, also 50 bis 100 Gew.-%, vorzugsweise mindestens 80 Gew.-%, also 80 bis 100 Gew.-%, einpolymerisiertes Styrol bezogen auf die Masse des Kunststoffes (ohne Treibmittel) auf. Als Comonomere kommen z.B. α-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d.h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet. Auch Mischungen verschiedener Styrol(co)polymerisate können verwendet werden. Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-α-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Kunststoffteilchen, besonders bevorzugt Styrolpolymerisate oder Styrolcopolymerisate, insbesondere Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Diese expandierten Polystyrolteilchen oder expandierte Styrolcopolymerteilchen können ohne oder mit weiteren Maßnahmen zur Treibmittelverminderung zur Herstellung des Lignocellulosewerkstoffes weiterverwendet werden.

Üblicherweise weist das expandierbare Polystyrol oder expandierbare Styrolcopolymerisat oder das expandierte Polystyrol oder expandierte Styrolcopolymerisat eine antistatische Beschichtung auf.

Dem Polymer, aus dem die expandierten Kunststoffteilchen (Komponente B) hergestellt werden, können vor oder während des Aufschäumens Pigmente und Partikel, wie Ruß, Graphit oder Aluminiumpulver, als Zusatzstoffe zugegeben werden.

Die expandierten Kunststoffteilchen der Komponente B) liegen in der Regel auch nach dem Verpressen zum Lignocellulosewerkstoff, in ungeschmolzenem Zustand vor, das bedeutet, dass die Kunststoffteilchen der Komponente B) in der Regel nicht in die Lignocelluloseteilchen eingedrungen sind oder diese imprägniert haben, sondern zwischen den Lignocelluloseteilchen verteilt sind. Üblicherweise lassen sich die Kunststoffteilchen der Komponente B) mit physikalischen Verfahren, zum Beispiel nach dem Zerkleinern des Lignocellulosewerkstoffs, von der Lignocellulose abtrennen.

Die Gesamtmenge der expandierten Kunststoffteilchen der Komponente B), bezogen auf die Gesamttrockenmasse des Kerns liegt in der Regel im Bereich von 0 bis 25 Gew.-%, vorzugsweise 0 bis 20 Gew.-%, besonders bevorzugt 0 bis 10 Gew.-%, insbesondere bei 0 Gew.-%.

### Komponente C-1), C-2), G-1) und G-2):

Die Gesamtmenge der Bindemittel der Komponente C-1), bezogen auf das Trockengewicht der Lignocellulosepartikel im Kern liegt im Bereich von 1 bis 50 Gew.-%, vorzugsweise 3 bis 30 Gew.-%, besonders bevorzugt 5 bis 15 Gew.-%.

Die Menge der Komponente C-2) liegt im Bereich von 0 bis 3 Gew.-%, vorzugsweise 0 bis 1 Gew.-%, besonders bevorzugt 0 bis 0,1 Gew.-%, ganz besonders bevorzugt 0 Gew.-%.

Die Gesamtmenge des Bindemittels der Komponente G-1), bezogen auf das Trockengewicht der Lignocellulosepartikel der Deckschicht(en) liegt im Bereich von 1 bis 30 Gew.-%, vorzugsweise 2 bis 20 Gew.-%, besonders bevorzugt 3 bis 15 Gew.-%.

Die Menge der Komponente G-2) liegt im Bereich von 0 bis 3 Gew.-%, vorzugsweise 0 bis 1 Gew.-%, besonders bevorzugt 0 bis 0,1 Gew.-%, ganz besonders bevorzugt 0 Gew.-%.

Die Bindemittel der Komponente C-1) können ausgewählt werden aus der Gruppe bestehend aus Aminoplastharz und Phenoplastharz.

Die Bindemittel der Komponente C-2) können ausgewählt werden aus der Gruppe der organischen Isocyanate mit mindestens zwei Isocyanatgruppen.

Die Bindemittel der Komponente G-1) können ausgewählt werden aus der Gruppe bestehend aus Aminoplastharz, Phenoplastharz, Protein-basiertem Bindemittel und anderem Polymerbasiertem Bindemittel.

Die Bindemittel der Komponente G-2) können ausgewählt werden aus der Gruppe der organischen Isocyanat mit mindestens zwei Isocyanatgruppen.

Als Komponenten C-1) und G-1) können gleiche oder unterschiedliche Bindemittel bzw. Bindemittelmischungen der Komponenten C-1) und G-1), bevorzugt gleiche, besonders bevorzugt in beiden Fällen Aminoplastharz, verwendet werden.

Die Gewichtsangabe bezieht sich bei Aminoplastharzen, Phenoplastharzen, Protein-basierten Bindemitteln und den anderen Polymer-basierten Bindemitteln auf den Feststoffgehalt der entsprechenden Komponente (bestimmt durch Verdunsten des Wassers bei 120°C, innerhalb von 2h nach Günter Zeppenfeld, Dirk Grunwald, Klebstoffe in der Holz- und Möbelindustrie, 2. Auflage, DRW-Verlag, Seite 268) und bei den organischen Isocyanaten auf die Isocyanatkomponente an sich, also zum Beispiel ohne Lösungsmittel oder Emulgiermedium.

### Phenoplastharz

Phenoplaste sind synthetische Harze, die durch Kondensation von Phenolen mit Aldehyden erhalten werden und gegebenenfalls modifiziert werden können. Neben unsubstituiertem Phenol können auch Phenolderivate für die Herstellung von Phenoplasten eingesetzt werden. Diese Derivate können Kresole, Xylenole oder andere Alkylphenole, zum Beispiel p-tert.-Butylphenol, p-tert.-Octylphenol und p-tert.-Nonylphenol, Arylphenole, zum Beispiel Phenylphenol und Naphthole, oder divalente Phenole, zum Beispiel Resorcinol und Bisphenol A, sein. Der wichtigste Aldehyd für die Herstellung von Phenoplasten ist Formaldehyd, der in unterschiedlicher Form eingesetzt werden kann, zum Beispiel als wässrige Lösung, oder in fester Form als Paraformaldehyd, oder als Formaldehyd-freisetzende Substanz. Andere Aldehyde, zum Beispiel Acetaldehyd, Acrolein, Benzaldehyd oder Furfural und Ketone können auch verwendet werden. Phenoplaste können durch chemische Reaktionen der Methylolgruppen oder der phenolischen Hydroxylgruppen und/oder durch physikalische Dispersion in einem Modifizierungsmittel modifiziert werden (EN ISO 10082).

Bevorzugte Phenoplaste sind Phenolaldehydharze, besonders bevorzug Phenolformaldehydharze (auch "PF-Harze" genannt) sind z.B. aus Kunststoff-Handbuch, 2. Auflage, Hanser 1988, Band 10 "Duroplaste", Seiten 12 bis 40 bekannt.

### Aminoplastharz

Als Aminoplastharz können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben. Es sind in der Regel Polykondensationsprodukte aus Verbindungen mit mindestens einer, gegebenenfalls teilweise mit organischen Resten substituierten, Aminogruppe oder Carbamidgruppe (die Carbamidgruppe wird auch Carboxamidgruppe genannt), bevorzugt Carbamidgruppe, bevorzugt Harnstoff oder Melamin, und einem Aldehyd, vorzugsweise Formaldehyd. Bevorzugte Polykondensationsprodukte sind Harnstoff-Formaldehydharze (UF-Harze), Melamin-Formaldehydharze (MF-Harze) oder melaminhaltige Harnstoff-Formaldehydharze (MUF-Harze), besonders bevorzugte Harnstoff-Formaldehydharze, beispielsweise Kaurit® Leim-Typen der Firma BASF SE.

Besonders bevorzugt sind Polykondensationsprodukte, bei denen das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,55:1, ganz besonders bevorzugt 0,3:1 bis 0,5:1 liegt. Die genannten Aminoplastharze werden üblicherweise in flüssiger Form, üblicherweise als 25 bis 90 gew.-%ige, vorzugsweise als 50 bis 70 gew.-%ige Lösung, vorzugsweise in wässriger Lösung eingesetzt, können aber auch als Feststoff eingesetzt werden.

Der Feststoffgehalt des flüssigen wässrigen Aminoplast-Harzes kann nach Günter Zeppenfeld, Dirk Grunwald, Klebstoffe in der Holz- und Möbelindustrie, 2. Auflage, DRW-Verlag, Seite 268 bestimmt werden.

### Organische Isocyanate

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische. Die Isocyanate können entweder aliphatisch, cycloaliphatisch oder aromatisch sein. Besonders bevorzugt ist das organische Isocyanat MDI (Methylendiphenyldiisocyanat) oder das oligomere organische Isocyanat PMDI (Polymeres Methylendiphenylendiisocyanat) oder Mischungen aus MDI und PMDI. Diese organischen Isocyanate sind erhältlich durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18, letzter Absatz bis Seite 19, zweiter Absatz und Seite 76, fünfter Absatz). Ganz besonders bevorzugt sind Produkte der LUPRANAT®-Typenreihe, insbesondere LUPRANAT® M 20 FB der BASF SE.

Das organische Isocyanat kann auch ein Isocyanat-terminiertes Prepolymer sein, das das Reaktionsprodukt eines Isocyanats, z.B. PMDI, mit einem oder mehreren Polyolen und/oder Polyaminen ist.

Es können Polyole verwendet werden, die aus der Gruppe Ethylenglykol, Diethylenglykol, Propylenglykol, Dipropylenglykol, Butandiol, Glycerin, Trimethylolpropan, Triethanolamin, Pentaerythrit, Sorbitol und Mischungen daraus, ausgewählt sind. Andere geeignete Polyole sind Biopolyole, wie Polyole aus Sojaöl, Rapsöl, Rizinusöl und Sonnenblumenöl. Geeignet sind auch Polyetherpolyole, die durch Polymerisierung von cyclischen Oxiden, wie zum Beispiel Ethylenoxid, Propylenoxid, Butylenoxid oder Tetrahydrofuran in der Gegenwart polyfunktioneller Initiatioren erhalten werden können. Geeignete Initiatoren enthalten aktive Wasserstoffatome und können Wasser, Butandiol, Ethylenglykol, Propylenglykol, Diethylenglykol, Triethylenglykol, Dipropylenglykol, Ethanolamin, Diethanolamin, Triethanolamin, Toluoldiamin, Diethyltoluoldiamin, Phenyldiamin, Diphenylmethandiamin, Ethylendiamin, Cyclohexandiamin, Cylcohexandimethanol, Resorcinol, Bisphenol A, Glycerin, Trimethylolpropan, 1,2,6-Hexantriol, Pentaerythrit, oder Gemische davon sein. Andere geeignete Polyetherpolyole umfassen Diole und Triole, wie beispielsweise Polyoxypropylendiole und -triole und Poly(oxyethylen-oxypropylen)diole und - triole, die durch gleichzeitige oder nacheinander erfolgende Additionsreaktionen von Ethylen- und Propylenoxiden mit di- oder trifunktionellen Initiatoren hergestellt werden. Geeignet sind auch Polyesterpolyole wie hydroxyterminierte Reaktionsprodukte von Polyolen, wie sie oben bereits beschrieben wurden, mit Polycarbonsäuren oder Polycarbonsäurederivaten, z. B. deren Anhydride, insbesondere Dicarbonsäuren oder Dicarbonsäurederivaten, beispielsweise Bernsteinsäure, Bernsteinsäuredimethylester, Glutarsäure, Glutarsäuredimethylester, Adipinsäure, Adipinsäuredimethylester, Sebacinsäure, Phthalsäureanhydrid, Tetrachlorophtalsäureanhydrid oder Dimethylterephthalat, oder Mischungen daraus.

Es können Polyamine verwendet werden, die aus der Gruppe Ethylendiamin, Toluoldiamin, Diaminodiphenylmethan, Polymethylenpolyphenylpolyamine, Aminoalkohole und Mischungen daraus, ausgewählt sind. Beispiele für Aminoalkohole sind Ethanolamin und Diethanolamin.

### Komponente G) zusätzlich:

### Protein-basierte Bindemittel

Geeignete Protein-basierte Bindemittel sind beispielsweise Kasein-, Glutin- und Blutalbuminleime. Außerdem können Bindemittel eingesetzt werden, bei denen alkalisch hydrolysierte Proteine als Bindemittelbestandteil eingesetzt werden. Solche Bindemittel sind bei M. Dunky, P. Niemz, Holzwerkstoffe und Leime, Springer 2002, Seiten 415 bis 417, beschrieben.

Besonders geeignet sind Soja-Protein basierte Bindemittel. Typischerweise werden diese Bindemittel aus Sojamehl hergestellt. Das Sojamehl kann gegebenenfalls modifiziert werden. Das Soja-basierte Bindemittel kann als Dispersion vorliegen. Es enthält verschiedenen funktionellen Gruppen, wie Lysin, Histidin, Arginin, Tyrosin, Tryptophan, Serin und/oder Cystein. In einer besonderen Ausführungsform wird das Soja-Protein copolymerisiert, z. B. mit Phenolharz, Harnstoffharz oder PMDI. In einer ganz besonderen Ausführungsform besteht das Soja-basierte Bindemittel aus einer Kombination eines Polyamidoepichlorhydrin-Harzes (PAE) mit einem Soja-basierten Bindemittel. Ein geeignetes Bindemittel ist zum Beispiel das kommerziell erhältliche Bindemittelsystem Hercules® PTV D-41080 Resin (PAE-Harz) und PTV D-40999 (Soja-Komponente).

### Andere Polymer-basierte Bindemittel

Geeignete Polymer-basierte Bindemittel sind wässrige Bindemittel, die ein Polymer N enthalten, welches aus folgenden Monomeren aufgebaut ist:
a) 70 bis 100 Gew.-% wenigstens einer ethylenisch ungesättigten Mono und/oder Dicarbonsäure (Monomer(e) N₁) und
b) 0 bis 30 Gew.-% wenigstens eines weiteren ethylenisch ungesättigten Monomeren, welches sich von den Monomeren N₁ unterscheidet (Monomer(e) N₂)
und gegebenenfalls einen niedermolekularen Vernetzer mit mindestens zwei funktionellen Gruppen, welche ausgewählt sind aus der Gruppe Hydroxy, Carbonsäure und deren Derivate, primäre, sekundäres und tertiäres Amin, Epoxy und Aldehyd.

Die Herstellung von Polymeren N ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als Monomere N₁ kommen insbesondere 3 bis 6 C-Atome aufweisende α,β-mono-ethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure und die Zweier-Kombinationen aus Acrylsäure und Maleinsäureanhydrid oder Acrylsäure und Maleinsäure insbesondere bevorzugt sind.

Als Monomer(e) N₂ kommen in einfacher Weise mit Monomer(en) N₁ radikalisch copolymerisierbare ethylenisch ungesättigte Verbindungen in Betracht, beispielsweise Ethylen, C₃- bis C₂₄-α-Olefine, wie Propen, 1-Hexen, 1-Octen, 1-Decen; vinylaromatische Monomere, wie Styrol, α-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C Atome aufweisenden Alkanolen, wie besonders Acrylsäure- und Methacrylsäuremethyl-, -ethyl-, -n-butyl-, - iso-butyl-, pentyl-, -hexyl-, -heptyl-, -octyl-, -nonyl-, -decyl- und -2-ethylhexylester, Fumar- und Maleinsäuredimethylester oder -di-n-butylester; Nitrile α,β-monoethylenisch ungesättigter Carbonsäuren, wie Acrylnitril, Methacrylnitril, Fumarsäuredinitril, Maleinsäuredinitril sowie C₄- bis C₈-konjugierte Diene, wie 1,3-Butadien und Isopren. Die genannten Monomere bilden in der Regel die Hauptmonomeren, die, bezogen auf die Gesamtmenge an Monomeren N₂, einen Anteil von > 50 Gew.-%, bevorzugt > 80 Gew.-% und insbesondere bevorzugt > 90 Gew.-% auf sich vereinen oder sogar die Gesamtmenge der Monomeren N₂ bilden. In aller Regel weisen diese Monomeren in Wasser bei Normalbedingungen (20°C, 1 atm (absolut)) lediglich eine mäßige bis geringe Löslichkeit auf.

Weitere Monomere N₂, die allerdings unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid; ferner Vinylsulfonsäure, 2-Acrylamido-2-methylpropan-sulfonsäure, Styrolsulfonsäure und deren wasserlösliche Salze sowie N-Vinylpyrroli-don; 2-Vinylpyridin, 4-Vinylpyridin; 2-Vinylimidazol; 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Üblicherweise sind die vorgenannten wasserlöslichen Monomeren N₂ lediglich als modifizierende Monomere in Mengen von < 10 Gew.-%, bevorzugt < 5 Gew.-% und insbesondere bevorzugt < 3 Gew.-%, bezogen auf die Gesamtmenge an Monomeren N₂, enthalten.

Weitere Monomere N₂, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldi-acrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldi-methacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁- bis C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. - methacrylat.

Häufig werden die vorgenannten vernetzenden Monomeren N₂ in Mengen von < 10 zu Gew.-%, bevorzugt jedoch in Mengen von < 5 Gew.-%, jeweils bezogen auf die Gesamtmenge an Monomeren N₂, eingesetzt. Insbesondere bevorzugt werden jedoch keinerlei derartige vernetzende Monomeren N₂ zu Herstellung des Polymers N eingesetzt.

Bevorzugte Polymere N sind erhältlich durch radikalisch initiierte Lösungspolymerisation lediglich von Monomeren N₁, besonders bevorzugt von 65 bis 100 Gew.-%, ganz besonders bevorzugt von 70 bis 90 Gew.-% Acrylsäure mit besonders bevorzugt 0 bis 35 Gew.-%, ganz besonders bevorzugt 10 bis 30 Gew.-% Maleinsäure oder Maleinsäureanhydrid.

Vorteilhaft weist Polymer N ein gewichtsmittleres Molekulargewicht M_{w} im Bereich von 1.000 bis 500.000 g/mol, bevorzugt 10.000 bis 300.000 g/mol, besonders bevorzugt 30.000 bis 120.000 g/mol auf.

Die Einstellung des gewichtsmittleren Molekulargewichts M_{w} bei der Herstellung von Polymer N ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts M_{w} ist dem Fachmann geläufig und erfolgt beispielsweise mittels Gelpermeationschromatograpie.

Gut geeignete Handelsprodukte für Polymere N sind zum Beispiel die Sokalan®-Produkte der BASF SE, welche beispielsweise auf Acrylsäure und/oder Maleinsäure basieren. Weitere geeignete Polymere sind in WO-A-99/02591 beschrieben.

Gut geeignete Vernetzer sind solche mit einem (gewichtsmittleren) Molekulargewicht im Bereich von 30 bis 10.000 g/mol. Beispielhaft seien genannt: Alkanolamine, wie Triethanolamin; Carbonsäuren, wie Zitronensäure, Weinsäure, Butantetracarbonsäure; Alkohole, wie Glucose, Saccharose oder andere Zucker, Glycerin, Glycol, Sorbitol, Trimethylolpropan; Epoxide, wie Bisphenol-A oder Bisphenol-F sowie darauf basierende Harze und weiterhin Polyalkylen-oxid-Glycidylether oder Trimethylolpropan-Triglycidylether. In einer bevorzugten Ausführungsform der Erfindung liegt das Molekulargewicht des verwendeten niedermolekularen Vernetzers im Bereich von 30 bis 4.000 g/mol, besonders bevorzugt im Bereich von 30 bis 500 g/mol. Andere geeignete Polymer-basierte Bindemittel sind wässrige Dispersionen, die ein oder mehrere Polymer(e) enthalten, welche aus folgenden Monomeren aufgebaut sind:
a. 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M₁), und
b. 50 bis 100 Gew.-% wenigstens eines weiteren ethylenisch ungesättigten Monomeren, welches sich von den Monomeren M₁ unterscheidet (Monomer(e) M₂).

Polymer M ist durch radikalisch initiierte Emulsionspolymerisation in einem wässrigen Medium der entsprechenden Monomeren M₁ und/oder M₂ erhältlich. Polymer M kann einphasig oder mehrphasig vorliegen. Polymer M kann einen Kern/Schale-Aufbau haben.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt (siehe z.B.: Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A-40 03 422 und Dispersionen synthetischer Hochpolymerer, F. Hölscher, Springer-Verlag, Berlin (1969)).

Die radikalisch initiierte wässrige Emulsionspolymerisationsreaktionen erfolgen üblicherweise so, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Als Monomer(e) M₁ kommen insbesondere Glycidylacrylat und/oder Glycidylmethacrylat sowie Hydroxyalkylacrylate und -methacrylate mit C₂- bis C₁₀-Hydroxyalkyl-gruppen, insbesondere C₂-bis C₄-Hydroxyalkylgruppen und bevorzugt C₂- und C₃-Hydroxyalkylgruppen in Betracht, zum Beispiel 2-Hydroxyethylacrylat, 2-Hydroxyethyl-methacrylat, 3-Hydroxypropylacrylat, 3-Hydroxypropylmethacrylat, 4-Hydroxybutyl-acrylat und/oder 4-Hydroxybutylmethacrylat. Mit besonderem Vorteil werden eines oder mehrere, vorzugsweise eines oder zwei, der folgenden Monomere M1 eingesetzt: 2 Hydroxyethylacrylat, 2-Hydroxyethylmethacrylat, Glycidylacrylat, Glycidylmethacrylat.

Erfindungsgemäß ist es möglich, gegebenenfalls eine Teil- oder die Gesamtmenge an Monomeren M₁ im Polymerisationsgefäß vorzulegen. Es ist aber auch möglich, die Gesamtmenge oder die gegebenenfalls verbliebene Restmenge an Monomeren M₁ während der Polymerisationsreaktion zuzudosieren. Die Gesamtmenge oder die gegebenenfalls verbliebene Restmenge an Monomeren M₁ kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M₁ während der Polymerisationsreaktion kontinuierlich mit gleichbleibenden Mengenströmen, insbesondere als Bestandteil einer wässrigen Monomerenemulsion.

Als Monomer(e) M₂ kommen insbesondere in einfacher Weise mit Monomer(en) M₁ radikalisch copolymerisierbare ethylenisch ungesättigte Verbindungen in Betracht, beispielsweise Ethylen; vinylaromatische Monomere, wie Styrol, α-Methylstyrol, o-Chlor-styrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester; Nitrile α,β-monoethylenisch ungesättigter Carbonsäuren, wie Acrylnitril, Methacrylnitril, Fumarsäuredinitril, Maleinsäuredinitril sowie C₄- bis C₈-konjugierte Diene, wie 1,3-Butadien und Isopren. Die genannten Monomere bilden in der Regel die Hauptmonomeren, die, bezogen auf die Gesamtmenge an Monomeren M₂, einen Anteil von >50 Gew.-%, bevorzugt >80 Gew.-% und insbesondere >90 Gew.-% auf sich vereinen. In aller Regel weisen diese Monomeren in Wasser bei Normalbedingungen (20°C, 1 atm (absolut)) lediglich eine mäßige bis geringe Löslichkeit auf.

Monomere M₂, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z. B. Acrylsäure, Methacrylsäure, Maleinsäure, Fumarsäure, Itaconsäure, Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon, 2-Vinyl-pyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethyl-amino)ethylmethacrylat, 2-(N-tert.-Butylamino)ethylmethacrylat, N-(3-N',N'-Dimethyl-amino-propyl)methacrylamid, 2-(1-Imidazolin-2-onyl)ethylmethacrylat und Ureidomethacrylat. Im Normalfall sind die vorgenannten wasserlöslichen Monomeren M₂ lediglich als modifizierende Monomere in Mengen von <10 Gew.-%, bevorzugt <5 Gew.-% und insbesondere bevorzugt <3 Gew.-%, bezogen auf die Gesamtmenge an Monomeren M₂, enthalten.

Monomere M₂, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenlykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylace-toxyethylacrylat bzw. -methacrylat. Häufig werden die vorgenannten vernetzenden Monomeren M₂ in Mengen von <10 zu Gew.-%, bevorzugt in Mengen von <5 Gew.-% und insbesondere bevorzugt in Mengen von <3 Gew.-%, jeweils bezogen auf die Gesamtmenge an Monomeren M₂, eingesetzt. Häufig werden jedoch keinerlei derartige vernetzende Monomeren M₂ verwendet.

Es ist möglich, gegebenenfalls eine Teil- oder die Gesamtmenge an Monomeren M₂ im Polymerisationsgefäß vorzulegen. Es ist aber auch möglich, die Gesamtmenge oder die gegebenenfalls verbliebene Restmenge an Monomeren M₂ während der Polymerisationsreaktion zuzudosieren. Die Gesamtmenge oder die gegebenenfalls verbliebene Restmenge an Monomeren M₂ kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M₂ während der Polymerisationsreaktion kontinuierlich mit gleichbleibenden Mengenströmen, insbesondere als Bestandteil einer wässrigen Monomerenemulsion.

Zur Herstellung der wässrigen Dispersion der Komponente (II) werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon- oder Acrylsäure-enthaltende Copolymerisate, beispielsweise solche die hierin als Komponente I(i) definiert sind. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z. B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 3 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Bevorzugt werden für das Verfahren nichtionische und/oder anionische Emulgatoren verwendet.

In der Regel beträgt die Menge an eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M. Für den Fall, dass Schutzkolloide als alleinige Dispergierhilfsmittel verwendet werden, liegt die eingesetzte Menge deutlich höher; man verwendet üblicherweise 5 bis 40 Gew.-% Dispergierhilfsmittel, bevorzugt 10 bis 30 Gew.-%, jeweils bezogen auf die Gesamtmenge des Monomerengemisches M.

Es ist möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Bevorzugte Polymere M enthalten a) 0,01 bis 50 Gew.-% wenigstens eines ethylenisch ungesättigten Monomeren, welches wenigstens eine Epoxid- und/oder wenigstens eine Hydroxyalkylgruppe enthält (Monomer(e) M₁) und b) 50 bis 99,99 Gew.-% wenigstens eines weiteren ethylenisch ungesättigten Monomeren, welches sich von den Monomeren M₁ unterscheidet (Monomer(e) M₂).

Besonders bevorzugte derartige Polymere M sind erhältlich durch radikalisch initiierte Lösungspolymersiation von 10 bis 30 Gew.-%, vorzugsweise 15 bis 22 Gew.-% Acrylsäure- und/oder Methacrylsäureestern mit C₁- bis C₈-Alkoholen - vorzugsweise Methanol, n-Butanol, 2-Ethylhexanol - mit 40 bis 70 Gew.-%, vorzugsweise 55 bis 65 Gew.-% Styrol und von 5 bis 50 Gew.-%, vorzugsweise 20 bis 30 Gew.-% 2-Hydroxyethyl-acrylat und/oder 2-Hydroxyethylmethacrylat und/oder Glycidylacrylat und/oder Glycidylmethacrylat, wobei die Summe der Komponenten 100 Gew.-% ergibt.

Weitere bevorzugte Polymere M enthalten kein(e) Monomer(e) M₁ und sind erhältlich durch radikalisch initiierte Lösungspolymersiation von 80 bis 99 Gew.-%, vorzugsweise 85 bis 95 Gew.-% Acrylsäureestern und/oder Methacrylsäureestern mit C₁- bis C₈-Alkoholen - vorzugsweise Methanol, n-Butanol, 2-Ethylhexanol - mit 0 bis 5 Gew.-%, vorzugsweise 1 bis 3 Gew.-% Ureidomethacrylat und von 0,5 bis 5 Gew.-%, vorzugsweise 1 bis 4 Gew.-% 3 bis 6 C-Atome aufweisende α,β-monoethylenisch ungesättigte Mono- und Dicarbonsäuren - vorzugsweise Acrylsäure, Methacrylsäure - und/oder Amiden dieser Säuren, wobei die Summe der Komponenten 100 Gew.-% ergibt.

Weitere bevorzugte Polymere M sind erhältlich durch Verwendung von Dispergierhilfsmitteln auf Basis von Poly(acrylsäure)n, wie sie in EP-A-1240205 oder DE-A-19991049592 beschrieben sind.

Bevorzugt haben derartige Polymere einen Kern/Schale-Aufbau (isotrope Verteilung der Phasen, zum Beispiel zwiebelschalenförmig) oder einen Janus-Aufbau (anisotrope Verteilung der Phasen).

Durch gezielte Variation von Art und Menge der Monomeren M₁ und M₂ ist es dem Fachmann möglich, wässrige Polymerzusammensetzungen herzustellen, deren Polymere M eine Glasübergangstemperatur T_{g} bzw. einen Schmelzpunkt im Bereich von (-60) bis 270°C aufweisen.

Andere geeignete wässrige Dispersionen sind Dispersionen ausgewählt aus der Gruppe der Polyurethane, der halogenierten Vinylpolymere, der Vinylalkohol- und/oder Vinylesterpolymere, Kautschuk, Kolophoniumharze und Kohlenwasserstoffharze. Solche Dispersionen sind kommerziell erhältlich, beispielsweise Vinnepas® Ethylen-Vinylacetat-Dispersionen von Wacker, oder Tacylon-Kolophoniumharze von Eastman Chemical Company. Wässrige Dispersionen von aliphatischen und aromatischen Polyurethanen, Polyvinylacetat-homo- und -copolymeren, Terpentinharze und Kohlenwasserstoffharze sind bevorzugt.

### Komponente A) und F):

Die Komponenten A) und F) sind jeweils unabhängig voneinander Mischungen enthaltend
- 50 bis 99 Gew.-%, bevorzugt 70 bis 97 Gew.-%, besonders bevorzugt 80 bis 90 Gew.-% organisches Isocyanat mit mindestens zwei Isocyanatgruppen oder deren Gemische [Bestandteil a₁) bzw. f₁)] und
- 1 bis 50 Gew.-%, bevorzugt 3 bis 30 Gew.-%, besonders bevorzugt 10 bis 20 Gew.-% organische Carbonsäure, Carbonsäureanhydrid, Carbonsäurechlorid oder deren Gemische [Bestandteil a₂) bzw. f₂)],
- 0 bis 49 Gew.-% bevorzugt 0 bis 10 Gew.-%, besonders bevorzugt 0 bis 5 Gew.-% Hilfsmittel oder deren Gemische [Bestandteil a₃) bzw.f₃)].

In einer besonderen Ausführungsform werden diese Mischungen bei Temperaturen zwischen 25 und 70°C, bevorzugt zwischen 30 und 60°C, besonders bevorzugt zwischen 35 und 50°C mit den Lignocellulosepartikeln LCP-1) bzw. LCP-2) in Kontakt gebracht.

In einer weiteren besonderen Ausführungsform werden diese Mischungen spätestens 3600 Sekunden, bevorzugt spätestens 300 Sekunden, besonders bevorzugt spätestens 60 Sekunden, insbesondere spätestens 2 Sekunden nach ihrer Herstellung, also, also nach dem Inkontaktbringen der Komponente C-1) (bzw. der Mischung, die die Komponente C-1) enthält) mit der Komponente A) bzw. dem Inkontaktbringen der Komponenten G-1) (bzw. der Mischung, die die Komponente G-1) mit der Komponente F) im Mischaggregat, mit den Lignocellulosepartikeln LCP-1) bzw. LCP-2) in Kontakt gebracht.

Als organische Carbonsäure, Carbonsäureanhydrid, Carbonsäurechlorid eignen sich organische Säurederivate mit einem Molekulargewicht von weniger als 2.000 g/mol, bevorzugt weniger als 1.000 g/mol, bevorzugt weniger als 500 g/mol. Als organische Carbonsäureanhydride eignen sich C₂- bis C₅₀-Carbonsäureanhydride wie Essigsäureanhydrid, Bersteinsäureanhydrid, Phtalsäureanhydrid, Glutarsäureanhydrid, Polymaleinsäureanhydrid, Perylentetracarbonsäureanhydrid , Maleinsäureanhydrid (MSA), als organische Carbonsäurechloride eignen sich C₂- bis C₂₀-Carbonsäurechloride wie Essigsäurechlorid, Phthalsäurechlorid, bevorzugt C₄- bis C₁₅-Carbonsäureanhydride wie Bernsteinsäureanhydrid, Phtalsäureanhydrid, Maleinsäureanhydrid (MSA), C₂- bis C₁₅-Carbonsäurechloride wie Essigsäurechlorid, besonders bevorzugt C₄- bis C₈-Carbonsäureanhydride wie Bernsteinsäureanhydrid und Maleinsäureanhydrid (MSA), C₂- bis C₈-Carbonsäurechloride wie Essigsäurechlorid, ganz besonders bevorzugt Maleinsäureanhydrid (MSA).

Geeignete organische Säuren sind C1- bis C15-Carbonsäuren wie Ameisensäure, Essigsäure, Maleinsäure, Benzoesäure, Phtalsäure, Sebacinsäure, organische Sulfonsäuren wie p-Toluolsulfonsäure, Methylsulfonsäure, Vinylsulfonsäure, Styrolsulfonsäure, Morpholinoethansulfonsäure, und organische Phosphorsäuren, also organische Phosphorsäuren wie Alkylphosphonsäuren oder Arylphosphonsäuren.

Enthält die Komponente a₂) bzw. f₂) organische Säuren, dann beträgt der Zeitraum zwischen Herstellung der Komponenten A) bzw. F) durch Mischen und dem Zugeben der Komponenten A) bzw. F) zu den Lignocellulosepartikeln LCP-1) bzw. LCP-2), weniger als 5 Minuten bevorzugt weniger als 1 Minute, besonders bevorzugt weniger als 10 Sekunden.

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische. Die Isocyanate können entweder aliphatisch, cycloaliphatisch oder aromatisch sein. Besonders bevorzugt ist das organische Isocyanat MDI (Methylendiphenyldiisocyanat) oder das oligomere organische Isocyanat PMDI (Polymeres Methylendiphenylendiisocyanat) oder Mischungen aus MDI und PMDI. Diese organischen Isocyanate sind, erhältlich sind durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), oder Mischungen aus MDI und PMDI. Ganz besonders bevorzugt sind Produkte der LUPRANAT®-Typenreihe der BASF SE, insbesondere LUPRANAT® M 20 FB der BASF SE.

Das organische Isocyanat kann auch ein Isocyanat-terminiertes Prepolymer sein, das das Reaktionsprodukt eines Isocyanats, z.B. PMDI, mit einem oder mehreren Polyolen und/oder Polyaminen ist.

Es können Polyole verwendet werden, die aus der Gruppe Ethylenglykol, Diethylenglykol, Propylenglykol, Dipropylenglykol, Butandiol, Glycerin, Trimethylolpropan, Triethanolamin, Pentaerythrit, Sorbitol und Mischungen daraus, ausgewählt sind. Andere geeignete Polyole sind Biopolyole, wie Polyole aus Sojaöl, Rapsöl, Rizinusöl und Sonnenblumenöl. Geeignet sind auch Polyetherpolyole, die durch Polymerisierung von cyclischen Oxiden, wie zum Beispiel Ethylenoxid, Propylenoxid, Butylenoxid oder Tetrahydrofuran in der Gegenwart polyfunktioneller Initiatioren erhalten werden können. Geeignete Initiatoren enthalten aktive Wasserstoffatome und können Wasser, Butandiol, Ethylenglykol, Propylenglykol, Diethylenglykol, Triethylenglykol, Dipropylenglykol, Ethanolamin, Diethanolamin, Triethanolamin, Toluoldiamin, Diethyltoluoldiamin, Phenyldiamin, Diphenylmethandiamin, Ethylendiamin, Cyclohexandiamin, Cylcohexandimethanol, Resorcinol, Bisphenol A, Glycerin, Trimethylolpropan, 1,2,6-Hexantriol, Pentaerythrit, oder Gemische davon sein. Andere geeignete Polyetherpolyole umfassen Diole und Triole, wie beispielsweise Polyoxypropylendiole und -triole und Poly(oxyethylen-oxypropylen)diole und - triole, die durch gleichzeitige oder nacheinander erfolgende Additionsreaktionen von Ethylen- und Propylenoxiden mit di- oder trifunktionellen Initiatoren hergestellt werden. Geeignet sind auch Polyesterpolyole wie hydroxyterminierte Reaktionsprodukte von Polyolen, wie sie oben bereits beschrieben wurden, mit Polycarbonsäuren oder Polycarbonsäurederivaten, z. B. deren Anhydride, insbesondere Dicarbonsäuren oder Dicarbonsäurederivaten, beispielsweise Bernsteinsäure, Bernsteinsäuredimethylester, Glutarsäure, Glutarsäuredimethylester, Adipinsäure, Adipinsäuredimethylester, Sebacinsäure, Phthalsäureanhydrid, Tetrachlorophtalsäureanhydrid oder Dimethylterephthalat, oder Mischungen daraus.

Es können Polyamine verwendet werden, die aus der Gruppe Ethylendiamin, Toluoldiamin, Diaminodiphenylmethan, Polymethylenpolyphenylpolyamine, Aminoalkohole und Mischungen daraus, ausgewählt sind. Beispiele für Aminoalkohole sind Ethanolamin und Diethanolamin.

Geeignete Hilfsmittel können beispielsweise inerte Verdünnungsmittel sein. Als inerte Verdünnungsmittel eignen sich inerte Flüssigkeiten, z.B. aromatische Verbindungen wie Toluol, Benzol, Xylole, Naphtaline, Chlorbenzol, organische Lösungsmittel wie Aceton, Ether, Ethylacetat, THF, Kohlensäureester (wie beispielsweise Dimethylcarbonat, Diethylcarbonat, Diphenylcarbonat, Propylencarbonat, Ethylencarbonat), Alkane und Alkene (wie beispielsweise Penten, Hexan, Cyclohexan, Heptan), Paraffinöl, Wachse, emulgierbare Wachse, Silikonöle, bevorzugt Kohlensäureester, Paraffinöl oder Silikonöl, besonders bevorzugt Kohlensäureester oder Paraffinöl.

Weitere geeignete Hilfsmittel sind Tenside wie anionische, kationische, nicht-ionische, amphotere Tenside oder deren Gemische.

Beispiele von Tensiden sind aufgeführt in McCutcheon's, Vol.1; Emulsifiers & Detergents, McCutcheon's Directories, Glen Rock, USA, 2008 (International Ed. or North American Ed.).

Geeignete anionische Tensid sind Alkali-, Erdalkali- oder Ammoniumsalze von Sulfonaten, Sulfaten, Phosphaten, Carboxylaten oder deren Gemische. Beispiele für Sulfonate sind Alkylarylsulfonate, Diphenylsulfonate, α-Olefinsulfonate, Ligninsulfonate, Sulfonate von Fettsäuren und Ölen, Sulfonate von ethoxylierten Alkylphenolen, Sulfonate von alkoxylierten Arylphenolen, Naphthalinsulfonat-Kondensate, Dodecyl- und Tridecylbenzolsulfonate, Naphthalin- und Sikylnaphthalinsulfonate oder Sulfosuccinate. Beispiele für Sulfate sind Sulfate von Fettsäuren und Ölen, ethoxylierte Alkylphenolsulfate, Alkoholsulfate, Sulfate von ethoxylierten Alkoholen oder Festsäureestersulfate.

Geeignete nichtionische Tenside sind Alkoxylate, N-substituierte Fettsäureamide, Aminoxide, Ester, Zucker-basierte Tenside, polymere Tenside, Blockpolymere und deren Gemische. Beispiele für Alkoxylate sind Verbindungen wie Alkohole, Alkylphenole, Amine, Amide, Arylphenole, Fettsäuren oder Fettsäureester, die mit 1 bis 50 Equivalenten Alkylenoxid alkoxyliert wurden. Für die Alkoxylierung können Ethylenoxid und/oder Propylenoxid verwendet werden, bevorzugt Ethylenoxid. Beispiele für N-substituierte Fettsäureamide sind Fettsäureglucamide oder Fettsäurealkanolamide. Bespiele für Ester sind Fettsäureester, Glycerinester oder Monoglyceride. Beispiele für Zucker-basierte Tenside sind Sorbitan, ethoxylierte Sorbitane, Saccharose- und Glycoseester oder Alkylpolyglucoside. Beispiele für polymere Tenside sind Homo- oder Copolymer von Vinylpyrrolidon, Vinylalkohol, oder Vinylacetat. Geeignete Blockpolymere sind Blockpolymere des Typs A-B oder A-B-A, die Blöcke aus Polyethylenoxid und Polypropylenoxid enthalten, oder des Typs A-B-C, die Alkanol und Blöcke aus Polyethylenoxid und Polypropylenoxid enthalten.

Geeignete kationische Tenside sind quaternäre Tenside, zum Beispiel quartäre Ammoniumverbindungen mit einer oder zwei hydrophoben Gruppen oder Ammoniumsalze von langkettigen primären Aminen.

Geeignete amphotere Tenside sind Alkylbetaine und Imidazoline.

Besonders bevorzugt sind nicht-ionische, oder amphotere Tenside und deren Gemische, besonders bevorzugt nicht-ionische Tenside, ganz besonders bevorzugt Fettalkoholpolyglykolether.

Weitere geeignete Hilfsmittel sind Trialkylphosphate. Geeignete Trialkylphosphate sind Verbindungen der Struktur R₃PO₄, wobei jeder der drei (3) Reste R unabhängig voneinander eine Alkylgruppe mit 1, 2, 3, 4, 5 oder 6 Kohlenstoffatomen sein kann. Jede Gruppe R kann die gleiche oder eine unterschiedliche, bevorzugt die gleiche, Anzahl an Kohlenstoffatomen aufweisen. Bei gleicher Anzahl von Kohlenstoffatomen kann es sich entweder um die gleichen Gruppen oder um isomere Gruppen, bevorzugt gleiche Gruppen, handeln.

Beispielsweise können Trimethylphosphat, Triethylphosphat, Triproplyphosphat, Tributylphosphat, Tripentylphosphat, Trihexylphosphat oder deren Gemische, bevorzugt Trimethylphosphat, Triethylphosphat, Tripropylphosphat oder deren Gemische, besonders bevorzugt Triethylphosphat verwendet werden.

Die Komponenten A) bzw. F) liegen vor dem Zugeben zu den Lignocellulosepartikeln LCP-1) bzw. LCP-2), wenn das Zugeben zu den Lignocellulosepartikeln getrennt von der Komponente C-1) bzw. G-1) erfolgt, bzw. vor dem Zugeben zu der Komponente C-1) bzw. G-1), wenn das Zugeben zu den Lignocellulosepartikeln als Mischung erfolgt, bevorzugt als homogene Lösung vor.

Die Komponenten A) bzw. F) können gegebenenfalls kurz vor dem Zugeben zu den Lignocellulosepartikeln LCP-1) bzw. LCP-2, wenn das Zugeben zu den Lignocellulosepartikeln getrennt von der Komponente C-1) bzw. G-1) erfolgt, bzw. vor dem Zugeben zu der Komponente C-1) bzw. G-1), wenn das Zugeben zu den Lignocellulosepartikeln als Mischung erfolgt, durch Mischen der Bestandteile a), b) und ggf. c) hergestellt werden. Der Zeitraum zwischen Herstellung und Zugeben beträgt hierbei 3 Stunden oder weniger. Der Zeitraum kann auch sehr kurz sein und nur wenige Minuten, beispielsweise 5 min und weniger betragen. Dabei kann das Mischen so erfolgen, dass die Bestandteile a), b) und ggf. c) aus separaten Behältern einem Mischaggregat, z.B. Mischbehälter oder statischem Mischer, zugeführt und darin gemischt werden und die so erhaltene Mischung den Lignocellulosepartikeln LCP-1) bzw. LCP-2) zugegeben wird.

### Komponente D) und H):

Die Komponenten D) und H) können jeweils unabhängig voneinander unterschiedliche oder gleiche, bevorzugt gleiche, dem Fachmann bekannte Härter oder deren Gemische enthalten. Bevorzugt werden diese Härter der Komponente C-1) bzw. der Komponente G-1) sofern es sich bei der Komponente G-1) um Bindemittel ausgewählt aus den Gruppen der Aminoplastharze und der Phenoplastharze handelt, zugesetzt.

Unter Härter für die Aminoplastharzkomponente oder für die Phenoplastharzkomponente sind hierin alle chemischen Verbindungen jeglichen Molekulargewichts zu verstehen, welche die Polykondensation von Aminoplastharz oder Phenoplastharz bewirken oder beschleunigen. Eine gut geeignete Gruppe der Härter für Aminoplastharz oder Phenoplastharz, insbesondere für Aminoplastharz, sind organische Säuren, anorganische Säuren, saure Salze von organischen Säuren und saure Salze von anorganischen Säuren, oder säurebildende Salze wie Ammoniumsalze oder saure Salze von organischen Aminen. Die Komponenten dieser Gruppe können selbstverständlich auch in Mischungen eingesetzt werden. Beispiele sind Ammoniumsulfat oder Ammoniumnitrat oder anorganische oder organische Säuren, zum Beispiel Schwefelsäure, Ameisensäure oder säureregenerierende Substanzen, wie Aluminiumchlorid, Aluminiumsulfat oder deren Gemische. Eine bevorzugte Gruppe der Härter für Aminoplastharz oder Phenoplastharz, insbesondere für Aminoplastharz, sind anorganische oder organische Säuren wie Salpetersäure, Schwefelsäure, Ameisensäure, Essigsäure und Polymere mit Säuregruppen, wie Homo- oder Copolymere der Acrylsäure oder Methacrylsäure oder Maleinsäure.

Werden Säuren, beispielsweise mineralische Säuren wie Schwefelsäure oder organische Säuren wie Ameisensäure eingesetzt, beträgt die Masse an Säure bezogen auf das Gesamttrockengewicht an Lignocellulosepartikeln LCP-1) bzw. LCP-2) Obevorzugt 0,001 bis 1 Gew.-%, bevorzugt 0,01 bis 0,5 Gew.-%, besonders bevorzugt 0,02 bis 0,1 Gew.-%.

Besonders bevorzugt werden Härter eingesetzt, die eine latente Härtung zeigen (M. Dunky, P. Niemz, Holzwerkstoffe und Leime, Springer 2002, Seiten 265 bis 269), sogenannte latente Härter. Latent bedeutet hier, dass die Härtungsreaktion nicht unmittelbar nach dem Vermischen des Aminoplastharzes und des Härters eintritt sondern erst verzögert, bzw. nach Aktivierung des Härters durch z.B. Temperatur. Die verzögerte Härtung erhöht die Verarbeitungszeit eines Aminoplastharz-Härter-Gemisches. Auch für die Mischung der Lignocellulosepartikel mit Aminoplastharz, Härter und den anderen Komponenten kann sich der Einsatz von latenten Härter vorteilhaft auswirken, weil es zu einer geringeren Voraushärtung des Aminoplastharzes vor Verfahrensschritt iv) kommen kann. Bevorzugte latente Härter sind Ammoniumchlorid, Ammoniumbromid, Ammoniumiodid, Ammoniumsulfat, Ammoniumsulfit, Ammoniumhydrogensulfat, Ammoniummethansulfonat, Ammonium-p-toluolsulfonat, Ammoniumtrifluormethansulfonat, Ammoniumnonafluorbutansulfonat, Ammoniumphosphat, Ammoniumnitrat, Ammoniumformiat, Ammoniumacetat, Morpholiniumchlorid, Morpholiniumbromid, Morpholiniumiodid, Morpholiniumsulfat, Morpholiniumsulfit, Morpholiniumhydrogensulfat, Morpholiniummethansulfonat, Morpholinium-p-toluolsulfonat, Morpholiniumtrifluormethansulfonat, Morpholiniumnonafluorbutansulfonat, Morpholiniumphosphat, Morpholiniumnitrat, Morpholiniumformiat, Morpholiniumacetat, Monoethanolammoniumchlorid, Monoethanolammoniumbromid, Monoethanolammoniumiodid, Monoethanolammoniumsulfat, Monoethanolammoniumsulfit, Monoethanolammoniumhydrogensulfat, Monoethanolammoniummethansulfonat, Monoethanolammonium-p-toluolsulfonat, Monoethanolammoniumtrifluormethansulfonat, Monoethanolammoniumnonafluorbutansulfonat, Monoethanolammoniumphosphat, Monoethanolammoniumnitrat, Monoethanolammoniumformiat, Monoethanolammoniumacetat oder deren Gemische, bevorzugt Ammoniumsulfat, Ammoniumnitrat, Ammoniumchlorid oder deren Gemische, besonders bevorzugt Ammoniumsulfat, Ammoniumnitrat oder deren Gemische.

Werden diese latenten Härter eingesetzt, beträgt die eingesetzte Masse dieser latenten Härter bezogen auf das Gesamttrockengewicht an Lignocellulosepartikeln LCP-1) bzw. LCP-2) bevorzugt 0,001 bis 5 Gew.-%, besonders bevorzugt 0,01 bis 0,5 Gew-%, ganz besonders bevorzugt 0,1 bis 0,5 Gew.-%.

Phenoplastharze, bevorzugt Phenolformaldehydharze, können auch alkalisch ausgehärtet werden, wobei bevorzugt Carbonate oder Hydroxide wie Kaliumcarbonat oder Natriumhydroxid eingesetzt werden.

Weitere Beispiele von Härtern für Aminoplastharze sind aus M. Dunky, P. Niemz, Holzwerkstoffe und Leime, Springer 2002, Seiten 265 bis 269 und weitere Beispiele von Härtern für Phenoplastharze, bevorzugt Phenolformaldehydharze sind aus M. Dunky, P. Niemz, Holzwerkstoffe und Leime, Springer 2002, Seiten 341 bis 352 bekannt.

### Komponente E) und I):

Die Komponenten E) und I) können ausgewählt werden aus der Gruppe der Tenside und/oder der Trialkylphosphate und/oder der Gruppe weiterer dem Fachmann bekannten Additive, z.B. Hydrophobierungsmittel wie Paraffin-Emulsionen, Pilzschutzmittel, Formaldehydfänger, zum Beispiel Harnstoff oder Polyamine, Flammschutzmittel, Lösungsmittel wie beispielsweise Alkohole, Glykole, Glycerin, Metalle, Kohlenstoff, Pigmente, Farbstoffe, Alkali- oder Erdalkalisalze aus der Gruppe der Sulfate, Nitrate, Phosphate, Halogenide oder deren Gemische. Es können unabhängig voneinander gleiche oder verschiedene, bevorzugt gleiche Additive in Mengen von 0 bis 5 Gew.-%, bevorzugt 0,5 bis 4 Gew.-%, besonders bevorzugt 1 bis 3 Gew.-% bezogen auf den Gesamttrockengehalt der Lignocellulosepartikel LCP-1) bzw. LCP-2) eingesetzt werden.

Geeignete Tenside sind anionische, kationische, nicht-ionische, oder amphotere Tenside, und deren Gemische.

Beispiele von Tensiden sind aufgeführt in McCutcheon's, Vol.1: Emulsifiers & Detergents, McCutcheon's Directories, Glen Rock, USA, 2008 (International Ed. or North American Ed.).

Geeignete anionische Tenside sind Alkali-, Erdalkali- oder Ammoniumsalze von Sulfonaten, Sulfaten, Phosphaten, Carboxylaten oder deren Gemische. Beispiele für Sulfonate sind Alkylarylsulfonate, Diphenylsulfonate, α-Olefinsulfonate, Ligninsulfonate, Sulfonate von Fettsäuren und Ölen, Sulfonate von ethoxylierten Alkylphenolen, Sulfonate von alkoxylierten Arylphenolen, Naphthalinsulfonat-Kondensate, Dodecyl- und Tridecylbenzolsulfonate, Naphthalin- und Sikylnaphthalinsulfonate oder Sulfosuccinate. Beispiele für Sulfate sind Sulfate von Fettsäuren und Ölen, ethoxylierte Alkylphenolsulfate, Alkoholsulfate, Sulfate von ethoxylierten Alkoholen oder Festsäureestersulfate.

Geeignete nichtionische Tenside sind Alkoxylate, N-substituierte Fettsäureamide, Aminoxide, Ester, Zucker-basierte Tenside, polymere Tenside, Blockpolymere und deren Gemische. Beispiele für Alkoxylate sind Verbindungen wie Alkohole, Alkylphenole, Amine, Amide, Arylphenole, Fettsäuren oder Fettsäureester, die mit 1 bis 50 Equivalenten Alkylenoxid alkoxyliert wurden. Für die Alkoxylierung können Ethylenoxid und/oder Propylenoxid verwendet werden, bevorzugt Ethylenoxid. Beispiele für N-substituierte Fettsäureamide sind Fettsäureglucamide oder Fettsäurealkanolamide. Bespiele für Ester sind Fettsäureester, Glycerinester oder Monoglyceride. Beispiele für Zucker-basierte Tenside sind Sorbitan, ethoxylierte Sorbitane, Saccharose- und Glycoseester oder Alkylpolyglucoside. Beispiele für polymere Tenside sind Homo- oder Copolymer von Vinylpyrrolidon, Vinylalkohol, oder Vinylacetat. Geeignete Blockpolymere sind Blockpolymere des Typs A-B oder A-B-A, die Blöcke aus Polyethylenoxid und Polypropylenoxid enthalten, oder des Typs A-B-C, die Alkanol und Blöcke aus Polyethylenoxid und Polypropylenoxid enthalten.

Geeignete kationische Tenside sind quaternäre Tenside, zum Beispiel quartäre Ammoniumverbindungen mit einer oder zwei hydrophoben Gruppen oder Ammoniumsalze von langkettigen primären Aminen.

Geeignete amphotere Tenside sind Alkylbetaine und Imidazoline.

Besonders bevorzugte Tenside sind Fettalkoholpolyglykolether, Fettalkoholsulfate, sulfonierte Fettalkoholpolyglykolether, Fettalkoholethersulfate, sulfonierte Fettsäuremethylester, Zuckertenside, wie Alkylglykoside, Alkylbenzolsulfonate, Alkansulfonate, Methylestersulfonate, quartäre Ammoniumsalze, wie beispielsweise Cetyltrimethylammoniumbromid und Seifen.

Geeignete Trialkylphosphate sind Verbindungen der Struktur R₃PO₄, wobei jeder der drei (3) Reste R unabhängig voneinander eine Alkylgruppe mit 1, 2, 3, 4, 5 oder 6 Kohlenstoffatomen sein kann. Jede Gruppe R kann die gleiche oder eine unterschiedliche, bevorzugt die gleiche, Anzahl an Kohlenstoffatomen aufweisen. Bei gleicher Anzahl von Kohlenstoffatomen kann es sich entweder um die gleichen Gruppen oder um isomere Gruppen, bevorzugt gleiche Gruppen, handeln.

Beispielsweise können Trimethylphosphat, Triethylphosphat, Triproplyphosphat, Tributylphosphat, Tripentylphosphat, Trihexylphosphat oder deren Gemische, bevorzugt Trimethylphosphat, Triethylphosphat, Tripropylphosphat oder deren Gemische, besonders bevorzugt Triethylphosphat verwendet werden.

### Verwendung:

Mit dem offenbarten Verfahren lassen sich ein- und mehrschichtige Lignocellulosewerkstoffe unterschiedlicher Art herstellen, besonders bevorzugt sind ein- und mehrschichtige Span- und Faserplatten und Oriented Strand Boards (OSB), ganz besonders bevorzugt einschichtige Span- und Faserplatten und mehrschichtige Spanplatte, insbesondere mehrschichtige Spanplatten.

Die Gesamtdicke der mehrschichtigen Lignocellulosewerkstoffe variiert mit dem Anwendungsgebiet und liegt in der Regel im Bereich von 0,5 bis 100 mm, vorzugsweise im Bereich von 10 bis 40 mm, insbesondere 15 bis 20 mm.

Die ein- und mehrschichtigen Lignocellulosewerkstoffe haben in der Regel eine mittlere Gesamtdichte von 100 bis 1000 kg/m³, bevorzugt 400 bis 850 kg/m³.

Die mehrschichtigen Spanplatten haben in der Regel eine mittlere Gesamtdichte von 400 bis 750 kg/m³, besonders bevorzugt 425 bis 650 kg/m³, insbesondere 450 bis 600 kg/m³. Die Dichte wird 24 h Stunden nach Herstellung gemäß EN 1058 bestimmt.

Die nach dem erfindungsgemäßen Verfahren hergestellten Lignocellulosewerkstoffe, insbesondere ein- und mehrschichtige Spanplatten und einschichtige Faserplatten, werden vor allem im Bau, im Innenausbau, im Laden- und Messebau, als Material für Möbel und als Verpackungsmaterial verwendet.

In einer bevorzugten Verwendung werden die nach dem erfindungsgemäßen Verfahren hergestellten Lignocellulosewerkstoffe werden als Innenlagen für Sandwichplatten eingesetzt. Dabei können die Außenlagen der Sandwichplatten aus unterschiedlichen Werkstoffen bestehen, beispielsweise aus Metall wie Aluminium oder Edelstahl, oder aus dünnen Holzwerkstoffplatten, wie Spanplatten oder Faserplatten, bevorzugt hochverdichtete Faserplatten (HDF), oder aus Laminaten wie zum Beispiel High Pressure Laminate (HPL).

In einer weiteren bevorzugten Verwendung werden die nach dem erfindungsgemäßen Verfahren hergestellten Lignocellulosewerkstoffe auf einer oder mehreren Seiten beschichtet, z.B., mit Möbelfolien, mit Melaminfilmen, mit Furnieren, mit Kunststoffkante oder mit Lack.

Im Bau, Innenausbau und Laden- und Messebau werden die nach dem hergestellten Lignocellulosewerkstoffe oder die daraus hergestellten beschichteten Lignocellulosewerkstoffe oder die daraus hergestellten Sandwichplatten beispielsweise als Dach- und Wandbeplankungen, Ausfachungen, Verschalungen, Fußböden, Türeninnenlagen, Trennwände oder Regalböden verwendet.

Im Möbelbau werden die nach dem erfindungsgemäßen Verfahren hergestellten Lignocellulosewerkstoffe oder die daraus hergestellten beschichteten Lignocellulosewerkstoffe oder die aus diesen Lignocellulosewerkstoffen hergestellten Sandwichplatten beispielsweise als Trägermaterial für Kastenmöbel, als Regalboden, als Türenmaterial, als Arbeitsplatte, als Küchenfront, als Elemente in Tischen, Stühlen und Polstermöbel eingesetzt.

### Beispiele

### Herstellung der Platten

Als Leim wurde ein Harnstoff-Formaldehyd-Leim (Kaurit® Leim 337 der BASF SE) verwendet. Der Feststoffgehalt wurde mit Wasser auf 64,2 Gew.-% eingestellt. Als pMDI Komponente wurde Lupranat® M 20 FB der BASF SE verwendet.

### Herstellung des Spanmaterials für Platte 1 (Beispiel 1 und 3)

In einem Mischer wurden 5,4 kg (Trockengewicht) Fichtenspäne (Mittelschichtspäne; 3 % Feuchte) mit 1 kg einer Mischung aus 100 Gew.-Teilen Kaurit®-Leim 337, 4 Gew.-Teilen einer 52%-igen wässrigen Ammoniumnitratlösung und 15 Gew.-Teilen Wasser gemischt. Anschließend wurden 21,6 g einer auf 57°C vorgewärmten Mischung aus 3 Gew.-Teilen pMDI und einem Gew.-Teil MSA im Mischer aufgebracht. Die Mischung wurde 2 min nach dem Vermischen auf die Späne aufgebracht.

### Herstellung des Spanmaterials für Platte 2 (Beispiel 2 und 4)

In einem Mischer wurden 5,4 kg (Trockengewicht) Fichtenspäne (Mittelschichtspäne; 3 % Feuchte) mit 1 kg einer Mischung aus 100 Gew.-Teilen Kaurit®-Leim 337, 4 Gew.-Teilen einer 52%-igen wässrigen Ammoniumnitratlösung, 15 Gew.-Teilen Wasser und 3 Gew.-Teilen einer Mischung aus 8 Gew.-Teilen pMDI und einem Gew.-Teil MSA (Maleinsäureanhydrid), im Mischer aufgebracht. Die Mischung wurde 2 min nach dem Vermischen auf die Späne aufgebracht.

### Pressen des Spanmaterials zu Spanplatten

950 g beleimte Späne wurden entweder sofort oder nach einer Wartezeit von 15 min in eine 30x30 cm-Form gestreut und kalt vorverdichtet. Anschließend wurde die so erhaltene vorverdichtete Spänematte in einer Heißpresse auf eine Dicke von 16 mm zu einer Spanplatte gepresst (Presstemperatur 210°C, Presszeit 80 sec.).

### Untersuchung der Spanplatten

Die Bestimmung der Querzugfestigkeit erfolgte gemäß EN 319.

Die Bestimmung der Dickenquellung nach 24 h erfolgte gemäß EN 317.

Die Bestimmung des Perforatorwerts als Maß für die Formaldehydemission erfolgte gemäß EN 120.

Die Ergebnisse der Versuche sind in der Tabelle zusammengestellt. Die Mengenangaben beziehen sich immer auf 100 Gew.-% Trockengewicht (atro) der Holzspäne.

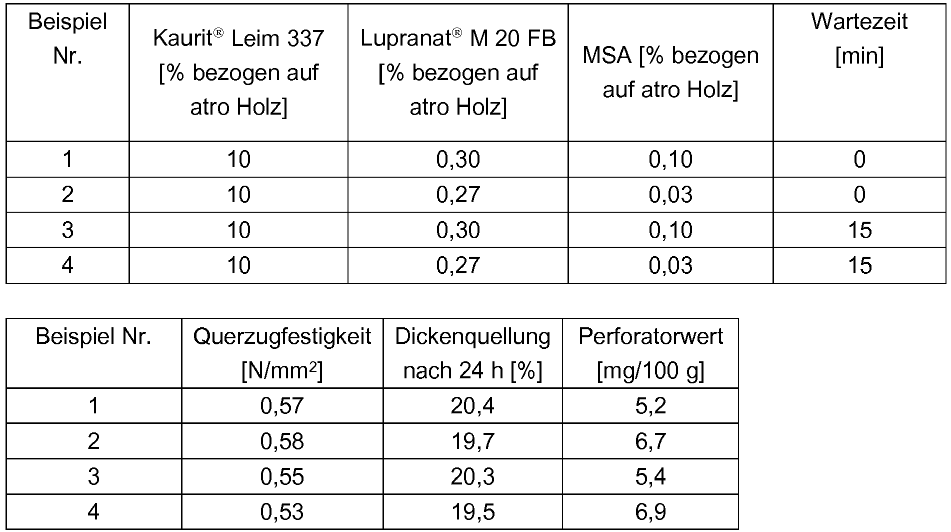

## Patentansprüche

1. Verfahren zur diskontinuierlichen oder kontinuierlichen Herstellung von ein- oder mehrschichtigen Lignocellulosewerkstoffen enthaltend die Verfahrensschritte
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte,
**dadurch gekennzeichnet, dass** man im Verfahrensschritt (I) für den Kern von mehrschichtigen oder für einschichtige Lignocellulosewerkstoffe eine Mischung (Komponente A) enthaltend
a₁) 50 bis 99 Gew.-% organisches Isocyanat mit mindestens zwei Isocyanatgruppen oder deren Gemische und
a₂) 1 bis 50 Gew.-% organisches C₄- bis C₁₅-Carbonsäureanhydrid oder deren Gemische und
a₃) 0 bis 30 Gew.-% Hilfsmittel oder deren Gemische
einsetzt.

2. Verfahren zur diskontinuierlichen oder kontinuierlichen Herstellung von ein- oder mehrschichtigen Lignocellulosewerkstoffen nach Anspruch 1, **dadurch gekennzeichnet, dass** man die Komponente A) als eine im Wesentlichen wasserfreie Mischung einsetzt.

3. Verfahren zur diskontinuierlichen oder kontinuierlichen Herstellung von ein- oder mehrschichtigen Lignocellulosewerkstoffen nach Anspruch 1 oder 2 enthaltend die Verfahrensschritte
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte,
indem man im Verfahrensschritt (I) für den Kern von mehrschichtigen oder für einschichtige Lignocellulosewerkstoffe, die Lignocellulosepartikel (Komponente LCP-1) mit
a) 0,01 bis 20 Gew.-% einer Mischung (Komponente A) enthaltend
a₁) 50 bis 99 Gew.-% organisches Isocyanat mit mindestens zwei Isocyanatgruppen oder deren Gemische,
a₂) 1 bis 50 Gew.-% organisches C₄- bis C₁₅-Carbonsäureanhydrid oder deren Gemische und
a₃) 0 bis 49 Gew.-% Hilfsmittel oder deren Gemische,
b) 0 bis 25 Gew.-% expandierten Kunststoffteilchen mit der Schüttdichte im Bereich von 10 bis 150 kg/m³ (Komponente B),
c) 1 bis 50 Gew.-% Bindemittel, ausgewählt aus der Gruppe der Aminoplastharze, Phenoplastharze oder deren Gemische (Komponente C-1) und 0 bis 3 Gew.-% organisches Isocyanat mit mindestens zwei Isocyanatgruppen (Komponente C-2),
d) 0 bis 5 Gew.-% Härter (Komponente D) und
e) 0 bis 5 Gew.-% Additiv (Komponente E), und, für die Deckschichten von mehrschichtigen Lignocellulosewerkstoffen, die Lignocellulosepartikel (Komponente LCP-2), mit
f) 0 bis 20 Gew.-% einer Mischung (Komponente F) enthaltend
f₁) 50 bis 99 Gew.-% organisches Isocyanat mit mindestens zwei Isocyanatgruppen oder deren Gemische,
f₂) 1 bis 50 Gew.-% organisches C₄- bis C₁₅-Carbonsäureanhydrid oder deren Gemische und
f₃) 0 bis 49 Gew.-% Hilfsmittel oder deren Gemische,
g) 1 bis 30 Gew.-% Bindemittel, ausgewählt aus der Gruppe bestehend aus Aminoplastharz, Phenoplastharz, Protein-basiertem Bindemittel und anderem Polymer-basierten Bindemittel oder deren Gemische (Komponente G-1) und 0 bis 3 Gew.-% organisches Isocyanat mit mindestens zwei Isocyanatgruppen (Komponente G-2),
h) 0 bis 5 Gew.-% Härter (Komponente H) und
i) 0 bis 5 Gew.-% Additiv (Komponente I)
vermischt, **dadurch gekennzeichnet, dass** man im Verfahrensschritt (I) die Komponente A) und
- die Komponente C-1) bzw.
- eine Mischung der Komponente C-1) mit einer oder mehreren Komponenten ausgewählt aus der Gruppe der Komponenten C-2), D) oder E)
(1) getrennt voneinander oder
(2) als Mischung innerhalb von 0,1 bis 3600 Sekunden nach Herstellung der Mischung auf die Lignocellulosepartikel aufbringt.

4. Verfahren zur Herstellung von ein- oder mehrschichtigen Lignocellulosewerkstoffen nach einem der Ansprüche 1 bis 3, **dadurch gekennzeichnet, dass** man das Verfahren kontinuierlich durchführt.

5. Verfahren zur Herstellung von ein- oder mehrschichtigen Lignocellulosewerkstoffen nach einem der Ansprüche 1 bis 4, **dadurch gekennzeichnet, dass** die im Wesentlichen wasserfreie Mischung (Komponente A) 0 bis 1 Gew.-% Wasser enthält.

6. Verfahren zur Herstellung von ein- oder mehrschichtigen Lignocellulosewerkstoffen nach einem der Ansprüche 1 bis 5, **dadurch gekennzeichnet, dass** das Gewichtsverhältnis der Komponente A) zur Komponente C-1) 0,001:1 bis 1:1beträgt.

7. Verfahren zur Herstellung von ein- oder mehrschichtigen Lignocellulosewerkstoffen nach einem der Ansprüche 1 bis 6, **dadurch gekennzeichnet, dass** man LCP-1), gegebenenfalls gemeinsam mit Komponente B) vorlegt, und mit Komponente C-1) und gegebenenfalls Komponente C-2) vermischt und anschließend mit Komponente D) und Komponente E) gemeinsam oder in beliebiger Reihenfolge und anschließend Komponente A) vermischt oder LCP-1), gegebenenfalls gemeinsam mit Komponente B) vorlegt, und mit den Komponente C-1) und gegebenenfalls Komponente C-2) und Komponente D) gemeinsam oder in beliebiger Reihenfolge vermischt und anschließend mit Komponente A) und anschließend Komponente E) vermischt oder LCP-1), gegebenenfalls gemeinsam mit Komponente B) vorlegt, und mit Komponente C-1) und gegebenenfalls Komponente C-2), Komponente D) und Komponente E) gemeinsam oder in beliebiger Reihenfolge vermischt und anschließend mit Komponente A) vermischt oder LCP-1), gegebenenfalls gemeinsam mit Komponente B) gemeinsam vorlegt, und mit Komponente A) vermischt und anschließend mit Komponente C-1) und gegebenenfalls Komponente C-2), Komponente D) und Komponente E) gemeinsam oder in beliebiger Reihenfolge vermischt.

8. Verfahren zur Herstellung von ein- oder mehrschichtigen Lignocellulosewerkstoffen nach einem der Ansprüche 1 bis 7, **dadurch gekennzeichnet, dass** die Lignocellulosepartikel LCP-1) und LCP-2) Holzfasern, Holzspäne oder Gemische sind, wie sie für die Herstellung von Spanplatten, MDF (Mitteldichte Faserplatten) und HDF (Hochdichte Faserplatten) eingesetzt werden.

9. Verfahren zur Herstellung von ein- oder mehrschichtigen Lignocellulosewerkstoffen nach einem der Ansprüche 1 bis 8, **dadurch gekennzeichnet, dass** man die Komponente A) bei erhöhter Temperatur auf die Lignocellulosepartikel LCP-1) aufbringt.

10. Verfahren zur Herstellung von ein- oder mehrschichtigen Lignocellulosewerkstoffen nach einem der Ansprüche 1 bis 9, **dadurch gekennzeichnet, dass** man die Komponente A) bis E) bzw. F) bis I) bzw. Mischungen der Komponente A) bis E) bzw. F) bis I) bei Temperaturen zwischen 25 und 70°C mit den Lignocellulosepartikeln LCP-1) bzw. LCP-2) in Kontakt bringt.

11. Verfahren zur Herstellung von ein- oder mehrschichtigen Lignocellulosewerkstoffen nach einem der Ansprüche 1 bis 10, **dadurch gekennzeichnet, dass** die Komponente D) eine latente Härtung zeigt bzw. ein oder mehrere latente Härter enthält.

12. Verfahren zur Herstellung von mehr- oder einschichtigen Lignocellulosewerkstoffen nach einem der Ansprüche 1 bis 11, **dadurch gekennzeichnet, dass** die Lignocellulosewerkstoffe eine Dichte von 100 bis 700 kg/m³ besitzen.

13. Ein- oder mehrschichtige Lignocellulosewerkstoffe mit einem Kern und gegebenenfalls mindestens einer oberen und einer unteren Deckschicht, hergestellt nach einem der Ansprüche 1 bis 12, in denen die gestreuten Schichten für den Kern von mehrschichtigen oder für einschichtige Lignocellulosewerkstoffe die Lignocellulosepartikel (Komponente LCP-1) mit
a) 0,01 bis 20 Gew.-% einer Mischung (Komponente A) enthaltend
a₁) 50 bis 99 Gew.-% organisches Isocyanat mit mindestens zwei Isocyanatgruppen oder deren Gemische,
a₂) 1 bis 50 Gew.-% organisches C₄- bis C₁₅-Carbonsäureanhydrid oder deren Gemische und
a₃) 0 bis 49 Gew.-% Hilfsmittel oder deren Gemische,
b) 0 bis 25 Gew.-% expandierte Kunststoffteilchen mit der Schüttdichte im Bereich von 10 bis 150 kg/m³ (Komponente B),
c) 1 bis 50 Gew.-% Bindemittel, ausgewählt aus der Gruppe der Aminoplastharze, Phenoplastharze oder deren Gemische (Komponente C-1) und 0 bis 3 Gew.-% organisches Isocyanat mit mindestens zwei Isocyanatgruppen (Komponente C-2),
d) 0 bis 5 Gew.-% Härter (Komponente D) und
e) 0 bis 5 Gew.-% Additiv (Komponente E),
und, für die Deckschichten von mehrschichtigen Lignocellulosewerkstoffen, die Lignocellulosepartikel (Komponente LCP-2), mit
f) 0 bis 20 Gew.-% einer Mischung (Komponente F) enthaltend
f₁) 50 bis 99 Gew.-% organisches Isocyanat mit mindestens zwei Isocyanatgruppen oder deren Gemische,
f₂) 1 bis 50 Gew.-% organisches C₄- bis C₁₅-Carbonsäureanhydrid oder deren Gemische und
f₃) 0 bis 49 Gew.-% Hilfsmittel oder deren Gemische,
g) 1 bis 30 Gew.-% Bindemittel ausgewählt aus der Gruppe bestehend aus Aminoplastharz, Phenoplastharz, Protein-basiertem Bindemittel und anderem Polymer-basierten Bindemittel oder deren Gemische (Komponente G), gegebenenfalls enthaltend organisches Isocyanat mit mindestens zwei Isocyanatgruppen,
h) 0 bis 5 Gew.-% Härter (Komponente H) und
i) 0 bis 5 Gew.-% Additiv (Komponente I)
vermischt, enthalten.

14. Ein- und mehrschichtige Lignocellulosewerkstoffe gemäß Anspruch 13, erhältlich nach einem Verfahren gemäß einem der Ansprüche 1 bis 12.

15. Verwendung der ein- und mehrschichtigen Lignocellulosewerkstoffe gemäß einem der Ansprüche 1 bis 14 im Bau, im Innenausbau, im Laden- und Messebau, als Material für Möbel oder als Verpackungsmaterial.

16. Verwendung der ein- und mehrschichtigen Lignocellulosewerkstoffe gemäß einem der Ansprüche 1 bis 14 als Dach- und Wandbeplankungen, Ausfachungen, Verschalungen, Fußböden, Türeninnenlagen, Trennwände, Regalböden oder als Trägermaterial für Kastenmöbel, als Regalboden, als Türenmaterial, als Arbeitsplatte, als Küchenfront, als Decklagen in Sandwichkonstruktionen, als Elemente in Tischen, Stühlen und Polstermöbel.

## Claims

1. A process for batchwise or continuous production of single-layer or multilayer lignocellulosic materials, comprising the process steps of
(I) mixing the components of the individual layers,
(II) scattering the mixture(s) produced in process step (I) to give a mat,
(III) optionally precompacting the scattered mat and
(IV) hot-pressing the optionally precompacted mat,
which comprises using, in process step (I), for the core of multilayer lignocellulosic materials or for single-layer lignocellulosic materials, a mixture (component A) comprising
a₁) 50% to 99% by weight of organic isocyanate having at least two isocyanate groups or mixtures thereof and
a₂) 1% to 50% by weight of organic C₄⁻ to C₁₅⁻ carboxylic anhydride or mixtures thereof and
a₃) 0% to 30% by weight of auxiliaries or mixtures thereof.

2. The process for batchwise or continuous production of single-layer or multilayer lignocellulosic materials according to claim 1, wherein component A) is used in the form of an essentially anhydrous mixture.

3. The process for batchwise or continuous production of single-layer or multilayer lignocellulosic materials according to claim 1 or 2, comprising the process steps of
(I) mixing the components of the individual layers,
(II) scattering the mixture(s) produced in process step (I) to give a mat,
(III) optionally precompacting the scattered mat and
(IV) hot-pressing the optionally precompacted mat,
by mixing, in process step (I), for the core of multilayer lignocellulosic materials or for single-layer lignocellulosic materials, the lignocellulose particles (component LCP-1) with
a) 0.01% to 20% by weight of a mixture (component A) comprising
a₁) 50% to 99% by weight of organic isocyanate having at least two isocyanate groups or mixtures thereof,
a₂) 1% to 50% by weight of organic C₄⁻ to C₁₅⁻ carboxylic anhydride or mixtures thereof and
a₃) 0% to 49% by weight of auxiliaries or mixtures thereof,
b) 0% to 25% by weight of expanded polymer particles having bulk density in the range from 10 to 150 kg/m³ (component B),
c) 1% to 50% by weight of binders, selected from the group of the amino resins, phenolic resins or mixtures thereof (component C-1) and 0% to 3% by weight of organic isocyanate having at least two isocyanate groups (component C-2),
d) 0% to 5% by weight of hardener (component D) and
e) 0% to 5% by weight of additive (component E), and, for the outer layer of multilayer lignocellulosic materials, mixing the lignocellulose particles (component LCP-2) with
f) 0% to 20% by weight of a mixture (component F) comprising
f₁) 50% to 99% by weight of organic isocyanate having at least two isocyanate groups or mixtures thereof,
f₂) 1% to 50% by weight of organic C₄⁻ to C₁₅⁻ carboxylic anhydride or mixtures thereof and
f₃) 0% to 49% by weight of auxiliaries or mixtures thereof,
g) 1% to 30% by weight of binders, selected from the group consisting of amino resin, phenolic resin, protein-based binder and other polymer-based binders or mixtures thereof (component G-1) and 0% to 3% by weight of organic isocyanate having at least two isocyanate groups (component G-2),
h) 0% to 5% by weight of hardener (component H) and
i) 0% to 5% by weight of additive (component I), wherein, in process step (I), component A) and
- component C-1) or
- a mixture of component C-1) with one or more components selected from the group of components C-2), D) and E)
are applied to the lignocellulose particles
(1) separately from one another or
(2) as a mixture within 0.1 to 3600 seconds after production of the mixture.

4. The process for producing single-layer or multilayer lignocellulosic materials according to any of claims 1 to 3, wherein the process is conducted continuously.

5. The process for producing single-layer or multilayer lignocellulosic materials according to any of claims 1 to 4, wherein the essentially anhydrous mixture (component A) comprises 0% to 1% by weight of water.

6. The process for producing single-layer or multilayer lignocellulosic materials according to any of claims 1 to 5, wherein the weight ratio of component A) to component C-1) is 0.001:1 to 1:1.

7. The process for producing single-layer or multilayer lignocellulosic materials according to any of claims 1 to 6, wherein LCP-1) is initially charged, optionally together with component B), and mixed with component C-1) and optionally component C-2) and then with component D) and component E), together or in any desired sequence, and then with component A), or LCP-1) is initially charged, optionally together with component B), and mixed with component C-1) and optionally component C-2) and component D), together or in any desired sequence, and then with component A) and then component E), or LCP-1) is initially charged, optionally together with component B), and mixed with component C-1) and optionally component C-2), component D) and component E), together or in any desired sequence, and then mixed with component A), or LCP-1) is initially charged, optionally together with component B), and mixed with component A) and then with component C-1) and optionally component C-2), component D) and component E), together or in any desired sequence.

8. The process for producing single-layer or multilayer lignocellulosic materials according to any of claims 1 to 7, wherein the lignocellulose particles LCP-1) and LCP-2) are wood fibers, wood shavings or mixtures as used for the production of fiberboards, MDF (medium-density fiberboard) and HDF (high-density fiberboard).

9. The process for producing single-layer or multilayer lignocellulosic materials according to any of claims 1 to 8, wherein component A) is applied to the lignocellulose particles LCP-1) at elevated temperature.

10. The process for producing single-layer or multilayer lignocellulosic materials according to any of claims 1 to 9, wherein components A) to E) and F) to I) or mixtures of components A) to E) and F) to I) are contacted with the lignocellulose particles LCP-1) or LCP-2) at temperatures between 25 and 70°C.

11. The process for producing single-layer or multilayer lignocellulosic materials according to any of claims 1 to 10, wherein component D) exhibits latent hardening or comprises one or more latent hardeners.

12. The process for production of multilayer or single-layer lignocellulosic materials according to any of claims 1 to 11, wherein the lignocellulosic materials have a density of 100 to 700 kg/m³.

13. Single-layer or multilayer lignocellulosic materials having a core and optionally at least one upper and one lower outer layer, produced according to any of claims 1 to 12, in which the scattered layers for the core of multilayer lignocellulosic materials or for single-layer lignocellulosic materials comprise lignocellulose particles (component LCP-1) mixed with
a) 0.01% to 20% by weight of a mixture (component A) comprising
a₁) 50% to 99% by weight of organic isocyanate having at least two isocyanate groups or mixtures thereof,
a₂) 1% to 50% by weight of organic C₄⁻ to C₁₅⁻ carboxylic anhydride or mixtures thereof and
a₃) 0% to 49% by weight of auxiliaries or mixtures thereof,
b) 0% to 25% by weight of expanded polymer particles having bulk density in the range from 10 to 150 kg/m³ (component B),
c) 1% to 50% by weight of binders, selected from the group of the amino resins, phenolic resins or mixtures thereof (component C-1) and 0% to 3% by weight of organic isocyanate having at least two isocyanate groups (component C-2),
d) 0% to 5% by weight of hardener (component D) and
e) 0% to 5% by weight of additive (component E), and, for the outer layer of multilayer lignocellulosic materials, mixing the lignocellulose particles (component LCP-2) with
f) 0% to 20% by weight of a mixture (component F) comprising
f₁) 50% to 99% by weight of organic isocyanate having at least two isocyanate groups or mixtures thereof,
f₂) 1% to 50% by weight of organic C₄⁻ to C₁₅⁻ carboxylic anhydride or mixtures thereof and
f₃) 0% to 49% by weight of auxiliaries or mixtures thereof,
g) 1% to 30% by weight of binders, selected from the group consisting of amino resin, phenolic resin, protein-based binder and other polymer-based binders or mixtures thereof (component G), optionally comprising organic isocyanate having at least two isocyanate groups,
h) 0% to 5% by weight of hardener (component H) and
i) 0% to 5% by weight of additive (component I).

14. Single-layer and multilayer lignocellulosic materials according to claim 13, obtainable by a process according to any of claims 1 to 12.

15. The use of the single-layer and multilayer lignocellulosic materials according to any of claims 1 to 14 in construction, in interior fitout, in shopfitting and exhibition stand construction, as a material for furniture or as a packaging material.

16. The use of the single-layer and multilayer lignocellulosic materials according to any of claims 1 to 14 as roof and wall paneling, infill, cladding, floors, inner layers of doors, separating walls, shelves, or as support material for freestanding cabinets, as shelf, as door material, as workbench, as kitchen unit front, as outer plies in sandwich constructions, as elements in tables, chairs and upholstered furniture.

## Revendications

1. Procédé de fabrication discontinue ou continue de matériaux lignocellulosiques mono- ou multicouches contenant les étapes de procédé suivantes :
(I) le mélange des composants des couches individuelles,
(II) la répartition du ou des mélanges fabriqués à l'étape de procédé (I) en un mat,
(III) éventuellement le précompactage des mats répartis, et
(IV) la compression à chaud des mats éventuellement précompactés,
**caractérisé en ce qu'**à l'étape de procédé (I), pour le noyau de matériaux lignocellulosiques multicouches ou pour des matériaux lignocellulosiques monocouches, un mélange (composant A) contenant :
a₁) 50 à 99 % en poids d'un isocyanate organique contenant au moins deux groupes isocyanate ou ses mélanges, et
a₂) 1 à 50 % en poids d'un anhydride d'acide carboxylique en C₄ à C₁₅ organique ou ses mélanges, et
a₃) 0 à 30 % en poids d'adjuvants ou leurs mélanges, est utilisé.

2. Procédé de fabrication discontinue ou continue de matériaux lignocellulosiques mono- ou multicouches selon la revendication 1, **caractérisé en ce que** le composant A) est utilisé sous la forme d'un mélange essentiellement anhydre.

3. Procédé de fabrication discontinue ou continue de matériaux lignocellulosiques mono- ou multicouches selon la revendication 1 ou 2, contenant les étapes de procédé suivantes :
(I) le mélange des composants des couches individuelles,
(II) la répartition du ou des mélanges fabriqués à l'étape de procédé (I) en un mat,
(III) éventuellement le précompactage des mats répartis, et
(IV) la compression à chaud des mats éventuellement précompactés,
selon lequel, à l'étape de procédé (I), pour le noyau de matériaux lignocellulosiques multicouches ou pour des matériaux lignocellulosiques monocouches, les particules de lignocellulose (composant LCP-1) sont mélangées avec :
a) 0,01 à 20 % en poids d'un mélange (composant A) contenant :
a₁) 50 à 99 % en poids d'un isocyanate organique contenant au moins deux groupes isocyanate ou ses mélanges,
a₂) 1 à 50 % en poids d'un anhydride d'acide carboxylique en C₄ à C₁₅ organique ou ses mélanges, et
a₃) 0 à 49 % en poids d' adjuvants ou leurs mélanges,
b) 0 à 25 % en poids de particules de matière plastique expansées ayant une densité apparente dans la plage allant de 10 à 150 kg/m³ (composant B),
c) 1 à 50 % en poids de liants, choisis dans le groupe constitué par les résines aminoplastes, les résines phénoplastes ou leurs mélanges (composant C-1) et 0 à 3 % en poids d'un isocyanate organique contenant au moins deux groupes isocyanate (composant C-2),
d) 0 à 5 % en poids d'agent de durcissement (composant D), et
e) 0 à 5 % en poids d'additif (composant E), et, pour les couches de recouvrement de matériaux lignocellulosiques multicouches, les particules de lignocellulose (composant LCP-2) sont mélangées avec :
f) 0 à 20 % en poids d'un mélange (composant F) contenant :
f₁) 50 à 99 % en poids d'un isocyanate organique contenant au moins deux groupes isocyanate ou ses mélanges,
f₂) 1 à 50 % en poids d'un anhydride d'acide carboxylique en C₄ à C₁₅ organique ou ses mélanges, et
f₃) 0 à 49 % en poids d'adjuvants ou leurs mélanges,
g) 1 à 30 % en poids de liants, choisis dans le groupe constitué par une résine aminoplaste, une résine phénoplaste, un liant à base de protéine et un autre liant à base de polymère ou leurs mélanges (composant G-1) et 0 à 3 % en poids d'un isocyanate organique contenant au moins deux groupes isocyanate (composant G-2),
h) 0 à 5 % en poids d'agent de durcissement (composant H), et
i) 0 à 5 % en poids d'additif (composant I), **caractérisé en ce qu'**à l'étape de procédé (I), le composant A) et
- le composant C-1) ou
- un mélange du composant C-1) avec un ou plusieurs composants choisis dans le groupe constitué par les composants C-2), D) ou E), sont appliqués sur les particules de lignocellulose
(1) séparément les uns des autres ou
(2) sous la forme d'un mélange
en 0,1 à 3 600 secondes après la fabrication du mélange.

4. Procédé de fabrication de matériaux lignocellulosiques mono- ou multicouches selon l'une quelconque des revendications 1 à 3, **caractérisé en ce que** le procédé est réalisé en continu.

5. Procédé de fabrication de matériaux lignocellulosiques mono- ou multicouches selon l'une quelconque des revendications 1 à 4, **caractérisé en ce que** le mélange essentiellement anhydre (composant A) contient 0 à 1 % en poids d'eau.

6. Procédé de fabrication de matériaux lignocellulosiques mono- ou multicouches selon l'une quelconque des revendications 1 à 5, **caractérisé en ce que** le rapport en poids entre le composant A) et le composant C-1) est de 0,001:1 à 1:1.

7. Procédé de fabrication de matériaux lignocellulosiques mono- ou multicouches selon l'une quelconque des revendications 1 à 6, **caractérisé en ce que** LCP-1) est chargé initialement, éventuellement conjointement avec le composant B), et mélangé avec le composant C-1) et éventuellement le composant C-2), puis mélangé avec le composant D) et le composant E) conjointement ou dans un ordre quelconque, puis mélangé avec le composant A), ou LCP-1) est chargé initialement, éventuellement conjointement avec le composant B), et mélangé avec le composant C-1) et éventuellement le composant C-2) et le composant D) conjointement ou dans un ordre quelconque, puis mélangé avec le composant A), puis avec le composant E), ou LCP-1) est chargé initialement, éventuellement conjointement avec le composant B), et mélangé avec le composant C-1) et éventuellement le composant C-2), le composant D) et le composant E) conjointement ou dans un ordre quelconque, puis mélangé avec le composant A), ou LCP-1) est chargé initialement, éventuellement conjointement avec le composant B), et mélangé avec le composant A), puis avec le composant C-1) et éventuellement le composant C-2), le composant D) et le composant E) conjointement ou dans un ordre quelconque.

8. Procédé de fabrication de matériaux lignocellulosiques mono- ou multicouches selon l'une quelconque des revendications 1 à 7, **caractérisé en ce que** les particules de lignocellulose LCP-1) et LCP-2) sont des fibres de bois, des copeaux de bois ou des mélanges, tels qu'utilisés pour la fabrication de panneaux agglomérés, de panneaux MDF (panneaux de fibres moyenne densité) et de panneaux HDF (panneaux de fibres haute densité).

9. Procédé de fabrication de matériaux lignocellulosiques mono- ou multicouches selon l'une quelconque des revendications 1 à 8, **caractérisé en ce que** le composant A) est appliqué sur les particules de lignocellulose LCP-1) à une température élevée.

10. Procédé de fabrication de matériaux lignocellulosiques mono- ou multicouches selon l'une quelconque des revendications 1 à 9, **caractérisé en ce que** les composants A) à E) ou F) à I) ou des mélanges des composants A) à E) ou F) à I) sont mis en contact avec les particules de lignocellulose LCP-1) ou LCP-2) à des températures comprises entre 25 et 70 °C.

11. Procédé de fabrication de matériaux lignocellulosiques mono- ou multicouches selon l'une quelconque des revendications 1 à 10, **caractérisé en ce que** le composant D) présente un durcissement latent ou contient un ou plusieurs agents de durcissement latents.

12. Procédé de fabrication de matériaux lignocellulosiques mono- ou multicouches selon l'une quelconque des revendications 1 à 11, **caractérisé en ce que** les matériaux lignocellulosiques présentent une densité de 100 à 700 kg/m³.

13. Matériaux lignocellulosiques mono- ou multicouches comprenant un noyau et éventuellement au moins une couche de recouvrement supérieure et inférieure, fabriqués selon l'une quelconque des revendications 1 à 12, dans lesquels les couches réparties pour le noyau de matériaux lignocellulosiques multicouches ou pour des matériaux lignocellulosiques monocouches contiennent les particules de lignocellulose (composant LCP-1) mélangées avec :
a) 0,01 à 20 % en poids d'un mélange (composant A) contenant :
a₁) 50 à 99 % en poids d'un isocyanate organique contenant au moins deux groupes isocyanate ou ses mélanges,
a₂) 1 à 50 % en poids d'un anhydride d'acide carboxylique en C₄ à C₁₅ organique ou ses mélanges, et
a₃) 0 à 49 % en poids d'adjuvants ou leurs mélanges,
b) 0 à 25 % en poids de particules de matière plastique expansées ayant une densité apparente dans la plage allant de 10 à 150 kg/m³ (composant B),
c) 1 à 50 % en poids de liants, choisis dans le groupe constitué par les résines aminoplastes, les résines phénoplastes ou leurs mélanges (composant C-1) et 0 à 3 % en poids d'un isocyanate organique contenant au moins deux groupes isocyanate (composant C-2),
d) 0 à 5 % en poids d'agent de durcissement (composant D), et
e) 0 à 5 % en poids d'additif (composant E),
et, pour les couches de recouvrement de matériaux lignocellulosiques multicouches, les particules de lignocellulose (composant LCP-2) mélangées avec
f) 0 à 20 % en poids d'un mélange (composant F) contenant :
f₁) 50 à 99 % en poids d'un isocyanate organique contenant au moins deux groupes isocyanate ou ses mélanges,
f₂) 1 à 50 % en poids d'un anhydride d'acide carboxylique en C₄ à C₁₅ organique ou ses mélanges, et
f₃) 0 à 49 % en poids d'adjuvants ou leurs mélanges,
g) 1 à 30 % en poids de liants, choisis dans le groupe constitué par une résine aminoplaste, une résine phénoplaste, un liant à base de protéine et un autre liant à base de polymère ou leurs mélanges (composant G), éventuellement contenant un isocyanate organique contenant au moins deux groupes isocyanate,
h) 0 à 5 % en poids d'agent de durcissement (composant H), et
i) 0 à 5 % en poids d'additif (composant I).

14. Matériaux lignocellulosiques mono- et multicouches selon la revendication 13, pouvant être obtenus par un procédé selon l'une quelconque des revendications 1 à 12.

15. Utilisation des matériaux lignocellulosiques mono-et multicouches selon l'une quelconque des revendications 1 à 14 dans le bâtiment, dans l'aménagement intérieur, dans la construction de magasins et de stands, en tant que matériau pou meubles ou en tant que matériau d'emballage.

16. Utilisation des matériaux lignocellulosiques mono-et multicouches selon l'une quelconque des revendications 1 à 14 en tant que panneaux de toitures et de murs, remplissages, coffrages, planchers, couches intérieures de portes, parois de séparation, étagères, ou en tant que matériau support pour armoires, en tant qu'étagère, en tant que matériau de porte, en tant que plan de travail, en tant que façade de cuisine, en tant que couche de recouvrement dans des constructions en sandwich, en tant qu'éléments dans des tables, des chaises et des meubles rembourrés.
